# EUROPEAN PATENT SPECIFICATION

(11) **EP 2 677 875 B1**
(45) Date of publication and mention of the grant of the patent: **07.02.2018**
(21) Application number: 12718439.8
(22) Date of filing: 24.02.2012
(51) Int. Cl.: A21D 6/00, A21D 13/02, A23L 3/16, B02B 1/00, B02C 9/04, B02C 23/08, A23L 7/10, A23L 7/152

(54) **STABILIZED WHOLE GRAIN FLOUR AND METHOD OF MAKING**
STABILISIERTES VOLLKORNMEHL UND DESSEN HERSTELLUNGSVERFAHREN
FARINE COMPLÈTE STABILISÉE ET MÉTHODE DE FABRICATION

(30) Priority: 24.02.2011 US 201161457315 P
(43) Date of publication of application: 01.01.2014
(73) Proprietor: Intercontinental Great Brands LLC, East Hanover, NJ 07936 (US)
(72) Inventor: HAWLEY, Derwin, G., Perrysburg OH 43551 (US); HOWEY, Edward, D., Toledo, OH 43614 (US); CLEAVER, William, H., Marietta, GA 30068 (US); BRAMBLE, Desiree, S., Monmouth Junction, NJ 08852 (US); HAYNES, Lynn, C., Morris Plains, NJ 07950 (US); ZHOU, Ning, East Hanover, NJ 07936 (US); ZHAO, Bin, East Hanover, NJ 07936 (US); HANSEN, Timothy, S., Lagrange, IL 60525 (US); CASSONE, Domenico, R., Branchburg, NJ 08876 (US); GABRIEL, Sarwat, East Hanover, NJ 07936 (US)
(74) Representative: Boult Wade Tennant
(86) International application number: PCT/US2012/026490
(87) International publication number: WO 2012/148543

(56) References cited:
- EP-A1- 2 127 525
- WO-A1-2007/149320
- US-A1- 2005 255 219
- US-A1- 2007 104 855
- US-A1- 2009 155 439
- MARY J GUTTIERI AND ADWARD SOUZA: "Sources of Variation in the Solvent Retention Capacity Test of Wheat Flour", CROP SCIENCE: A JOURNAL SERVING THE INTERNATIONAL COMMUNITY OF CROP SCIENTISTS, CROP SCIENCE SOCIETY OF AMERICA, US, vol. 43, 1 September 2003 (2003-09-01), pages 1628-1633, XP008131410, ISSN: 0011-183X
- T. GALLIARD, D.M. GALLAGHER: "The effects of wheat bran particle size and storage period on bran flavour and baking quality of bran/flour blends", JOURNAL OF CEREAL SCIENCE, vol. 8, no. 2, 22 January 1988 (1988-01-22), pages 147-154, XP002677182,
- MOLTEBERG E L ET AL: "EFFECTS OF STORAGE AND HEAT PROCESSING ON THE CONTENT AND COMPOSITION OF FREE FATTY ACIDS IN OATS", CEREAL CHEMISTRY, AMERICAN ASSOCIATION OF CEREAL CHEMISTS. MINNEAPOLIS, US, vol. 72, no. 1, 1 January 1995 (1995-01-01), pages 88-93, XP002067653, ISSN: 0009-0352
- BURI R C ET AL: "Description and Characterization of Wheat Aleurone", CEREAL FOODS WORLD, ST. PAUL, MN, vol. 49, no. 5, 1 September 2004 (2004-09-01), pages 274-282, XP008131409, ISSN: 0009-0360

## Description

### FIELD OF THE INVENTION

The present invention relates to compositions and methods for the production of stabilized whole grain flour and related products.

### BACKGROUND

Food products containing whole grain flour ingredients having large particle sizes may exhibit a coarse, gritty appearance and texture from the whole grain flour ingredient. As such, the mass production of whole grain flour involves milling of whole grains to obtain smaller particle sizes and particle size distributions similar to white flour. The increased amount of grinding needed to obtain smaller particle sizes, however, tends to increase instability of the whole grain flour and increase starch damage, resulting in poor food processing performance. The functionality of whole grain flour, especially for cookie, cracker and cereal production, can be greatly compromised in terms of dough machinability and cookie spread due to significant amounts of gelatinized and damaged starch in the flour resulting from fine-grinding.

It is generally known that whole grain wheat flours containing bran and germ are less stable than white refined wheat flours. Storage of whole grain wheat flours for as little as 30 days at 23.9°C (75°F) can result in the development of undesirable odors and flavors in products made with the whole grain flour. Concurrent with the development of off-flavors is an increase in the amount of free fatty acids in the flours, correlated with an increased rate of oxygen uptake in the flours and the formation of the oxidative components of rancidity. Decreasing particle size increases the rate and extent of the deterioration of grain components. While heat and moisture treatment is commonly used to inactivate enzymes responsible for flour deterioration, it has been recently shown to contribute to oxidative rancidity as measured by hexanal formation, a common marker used to detect oxidative rancidity, in oat flour. Accordingly, as the demand for whole grain products grows, there is an increasing need for a whole grain flour with enhanced shelf
stability and expanded food processing capabilities that can also meet the texture, appearance and mouth-feel that consumers prefer.

US2009155439 discloses a mechanical extrusion stabilisation process for whole grains.

US2005255219 discloses methods for treating wheat grain to reduce the active enzymes.

### SUMMARY

The present invention provides a method for the production of a stabilised whole grain flour and a heat-stabilised whole grain flours as defined in the claims appended hereto.

According to a first aspect the present invention provides a method for the production of stabilized whole grain flour comprising: a) milling whole grains to obtain a separate endosperm fraction, a low ash fine bran and germ fraction separate from the endosperm, and a coarse bran and germ fraction separate from the endosperm fraction and the low ash fine bran and germ fraction, wherein said endosperm fraction has an ash content of 0.5 wt. % to 0.6% wt. % and a particle size distribution of at least 65% by weight having a particle size of less than or equal to 149 microns, and less than or equal to 5% by weight having a particle size of greater than 250 microns, said low ash fine bran and germ fraction has an ash content of 0.6 wt. % to 2.0 wt. % and a particle size distribution of at least 65% by weight having a particle size of less than or equal to 149 microns, and less than or equal to 10% by weight having a particle size of greater than 250 microns, and said coarse bran and germ fraction has an ash content of above 2 wt. % and a particle size distribution of at least 75% by weight having a particle size of greater than or equal to 500 microns, less than or equal to 5% by weight having a particle size of less than 149 microns, and 15% by weight to 25% by weight, having a particle size of less than 500 microns but greater than or equal to 149 microns, b) grinding said coarse bran and germ fraction without substantially damaging starch of the coarse bran and germ fraction to obtain a ground coarse bran and germ fraction, wherein said low ash fine bran and germ fraction is not ground, c) stabilizing said low ash fine bran and germ fraction and said ground coarse bran and germ fraction by heating said low ash fine bran and germ fraction and said ground coarse bran and germ fraction, to obtain a stabilized fine bran and germ fraction, and d) combining said stabilized fine bran and germ fraction with said endosperm fraction to obtain a stabilized whole grain flour having a particle size distribution of 0% by weight on a No. 35 (500 micron) U.S. Standard Sieve, and less than or equal to about 20% by weight on a No. 70 (210 micron) U.S. Standard Sieve, wherein said low ash fine bran and germ fraction is from 3% by weight to 15% by weight and is not ground thereby reducing starch damage and increasing production efficiency.

Preferably, the low ash fine bran and germ fraction is not subjected to further particle size reduction, and the coarse bran and germ fraction is subjected to further particle size reduction, wherein said grinding said coarse bran and germ fraction uses a two stage grinding process, wherein a first grinding stage comprises particle-to-particle collisions and a second grinding stage comprises grinding by mechanical size reduction and wherein particles finer than a first particle fineness are not subjected to said second grinding stage, to produce a ground coarse bran and germ fraction, wherein in step (c), said ground coarse bran and germ fraction and said low ash fine bran and germ fraction are stabilised to obtain a stabilized fine bran and germ fraction which has a sodium carbonate-water solvent retention capacity of less than 200%, and wherein said stabilized whole grain flour obtained in step (d) has a sodium carbonate-water solvent retention capacity of less than 90% and a hexanal content of less than 10 ppm after 1 month accelerated storage at 95°C, based upon the weight of the stabilized whole grain flour.

In another inventive aspect, the present invention provides a heat-stabilized whole grain flour comprising an endosperm fraction having an ash content of 0.5 wt. % to 0.6% wt. %, a low ash fine bran and germ fraction having an ash content of 0.6 wt. % to 2.0 wt. %, and a coarse bran and germ fraction having an ash content of above 2 wt. %, the heat-stabilized whole grain flour having: a) a lipase activity of less than 250 units/g hour of the stabilized whole grain flour, where a unit is the number of micromoles (jam) of 4-methylumbelliferyl heptanonate (4-MUH) hydrolyzed per hour per gram of stabilized whole grain flour, b) an acrylamide content less than 45 ppb, based upon the weight of stabilized whole grain flour, c) a sodium carbonate-water solvent retention capacity (SRC sodium carbonate) of less than 90%, d) a free fatty acid content of less than 10% by weight of total flour lipids at three months or less than 3,000 ppm, based upon the weight of the stabilized whole grain flour, and e) a hexanal content of less than 10 ppm after 1 month accelerated storage at 95°C, based upon the weight of the stabilized whole grain flour, and a particle size distribution of 0% by weight on a No. 35 (500 micron) U.S. Standard Sieve, and less than or equal to 10% by weight on a No. 70 (210 micron) U.S. Standard Sieve.

There is described herein a method for increasing the production of a stabilized bran component without substantially damaging starch includes the steps of: a) milling whole grains to obtain an endosperm fraction, a low ash fine bran and germ fraction which is not subjected to further particle size reduction, and a coarse bran and germ fraction which is subjected to further particle size reduction, b) grinding the coarse bran and germ fraction to obtain a first ground coarse bran and germ fraction and a second ground coarse bran and germ fraction, wherein grinding of the coarse bran and germ fraction to obtain the second ground coarse fraction comprises a first grinding stage and a second grinding stage, the first grinding stage comprising grinding by particle-to-particle collisions, and the second grinding stage comprising grinding by mechanical size reduction, the first grinding stage producing both the first ground coarse bran and germ fraction, and a first stage ground coarse fraction, wherein the first stage ground coarse fraction is subjected to the second grinding stage to obtain the second ground coarse fraction, and the first ground coarse fraction is not subjected to said second grinding stage, c) combining the low ash bran and germ fraction, the first ground coarse bran and germ fraction, and the second ground coarse bran and germ fraction to obtain a combined fine bran and germ fraction, and d) stabilizing the combined fine bran and germ fraction to obtain a stabilized combined fine bran and germ fraction.

There is described herein a stabilized bran component comprising bran, germ and starch, the amount of bran being at least 50% by weight, and the amount of starch being from 10% by weight to 40% by weight, based upon the weight of the stabilized bran component, the stabilized bran component having: a) a particle size distribution of less than or equal to 15% by weight on a No. 35 (500 micron) U.S. Standard Sieve, and greater than or equal to 75% by weight less than or equal to 149 microns, b) a lipase activity of less than 250 units/g/hour of the stabilized bran component, where a unit is the number of micromoles (∼tm) of 4-methylumbelliferyl heptanonate (4-MUH) hydrolyzed per hour per gram of stabilized bran component, c) an acrylamide content less than or equal to 150 ppb, based upon the weight of the stabilized bran component, d) a starch melting enthalpy of greater than 2 J/g, based upon the weight of the stabilized ground coarse fraction, as measured by differential scanning calorimetry (DSC), at a peak temperature of from 60°C to 65°C, and e) a sodium carbonate-water solvent retention capacity (SRC sodium carbonate) of less than 200%.

Preferably the inventive method is a method for producing stabilized whole grain flour including endosperm, bran and germ, without substantially damaging starch comprising: wherein said coarse bran and germ fraction has a residue of endosperm, wherein in step (b) said coarse bran and germ fraction, including said endosperm residue in an amount of 5-10% of the endosperm in the whole grains, is ground to minimize starch damage and to produce the ground coarse bran and germ fraction, further comprising hydrating said ground coarse bran and germ fraction and said low ash fine bran and germ fraction to a moisture content of 10% to 20% by weight, based upon the weight of the fraction, wherein in step (c) up to 10% of said endosperm residue from said ground coarse bran and germ fraction is subjected to stabilization to avoid starch gelatinization, and 80-100 % of the bran and germ is subjected to stabilization to reduce lipase and lipxoygenase activity, to produce a stabilized whole grain flour which has a sodium carbonate- water solvent retention capacity of less than 90% and a hexanal content of less than about 10 ppm after 1 month accelerated storage at 95°C, based upon the weight of the stabilized whole grain flour.

There is described herein a method for the production of stabilized whole grain flour is disclosed, including the steps of: a) milling whole grains to obtain an endosperm fraction, a low ash fine bran and germ fraction, and a coarse bran and germ fraction, b) grinding the coarse bran and germ fraction without substantially damaging starch of the coarse bran and germ fraction to obtain a ground coarse bran and germ fraction, (c) hydrating the endosperm fraction to obtain a moisture content of from 10% to 14.5% by weight, based upon the weight of the endosperm fraction, (d) hydrating the ground coarse bran and germ fraction to obtain a moisture content of from 10% to 20% by weight, based up on the weight of the ground coarse bran and germ fraction; e) stabilizing the low ash fine bran and germ fraction and the ground coarse bran and germ fraction, to obtain a stabilized combined fine bran and germ fraction, and f) combining the stabilized fine bran and germ fraction with said endosperm fraction to obtain a stabilized whole grain flour with reduced starch damage.

There is described herein a method for the production of stabilized whole grain flour comprising: a) milling whole grains to obtain an endosperm fraction, a low ash fine bran and germ fraction, and a coarse bran and germ fraction, b) grinding the coarse bran and germ fraction using a two-stage grinding process, wherein a first grinding stage comprises grinding by particle-to-particle collisions and a second grinding stage comprises grinding by mechanical size reduction, wherein particles of a first particle fineness are sorted during or after the first grinding stage and not subjected to the second grinding stage, to create a ground coarse bran and germ fraction with reduced starch damage, d) stabilizing the low ash fine bran and germ fraction and the ground coarse bran and germ fraction, to obtain a stabilized combined fine bran and germ fraction, and e) combining the stabilized combined fine bran and germ fraction with the endosperm fraction to obtain a stabilized whole grain flour with reduced starch damage.

There is described herein a method of milling bran and germ from whole grain, comprising: a) milling a low ash fine bran and germ fraction, and a coarse bran and germ fraction, b) grinding said coarse bran and germ fraction without substantially damaging starch of the coarse bran and germ fraction to obtain a ground coarse bran and germ fraction, (c) hydrating the ground coarse bran and germ fraction to obtain a moisture content of from 10% to 20% by weight, based up on the weight of the ground coarse bran and germ fraction, and d) stabilizing the low ash fine bran and germ fraction and the ground coarse bran and germ fraction, to obtain a stabilized fine bran and germ fraction, which has a sodium carbonate-water solvent retention capacity (SRC sodium carbonate) of less than about 200 %.

### BRIEF DESCRIPTION OF THE DRAWINGS

FIG. 1 shows a block flow process schematic diagram for the production of stabilized whole grain flour in accordance with an embodiment of the invention.
FIG. 2 shows a schematic diagram of an apparatus which may be employed in one embodiment of the invention for producing stabilized whole grain flour.

### DETAILED DESCRIPTION OF THE INVENTION

Except in the examples, or where otherwise expressly indicated, all numerical quantities in this description indicating amounts of material and/or use are to be understood as modified by the word "about" in describing the broadest scope of the invention. Practice within the numerical limits stated is generally preferred.

It is also to be understood that this invention is not limited to the specific embodiments and methods described below, as specific components and/or conditions may, of course, vary. Furthermore, the terminology used herein is used only for the purpose of describing particular embodiments of the present invention and is not intended to be limiting in any way. Notably, the figures are not to scale.

It must also be noted that, as used in the specification and the appended claims, the singular form "a", "an", and "the" comprise plural referents unless the context clearly indicates otherwise. For example, reference to a component in the singular is intended to comprise a plurality of components.

The term "whole grain" includes the grain in its entirety, for example as a wheat berry or kernel, prior to any processing. As indicated in the U.S. Food and Drug Administration (FDA) February 15, 2006 draft guidance and as used herein, the term "whole grain" includes cereal grains that consist of the intact, ground, cracked or flaked fruit of the grains whose principal components - the starchy endosperm, germ and bran - are present in the same relative proportions as they exist in the intact grain. The FDA outlined that such grains may include barley, buckwheat, bulgur, corn, millet, flee, rye, oats, sorghum, wheat and wild rice

The term "refined wheat flour product" is a wheat flour that meets the FDA standards for a refined wheat flour product of a particle size in which not less than 98 % passes through a U.S. Wire 70 sieve (210 microns).

The term "milling" as used herein includes the steps of rolling, breaking sifting and sorting the whole grain to separate it into its constituent parts, which may also result in some reduction of particle size of the constituent parts.

The term "grinding" as used herein includes any process directed to reducing particle size, including but not limited to colliding particles against one another or mechanically reducing the particle size.

The term "tempering" as used herein is the process of adding water to wheat before milling to toughen the bran and mellow the endosperm of the kernel and thus improve flour separation efficiency.

The term "post-hydration" as used herein refers to the step of adjusting hydration post-milling or post-grinding to adjust the moisture content of an individual constituent and/or to adjust the moisture content of the final flour.

### Whole Grain Flour and the Problem of Rancidity

As set forth above, the problem of rancidity is a problem that limits the shelf-life of whole grain flours. Several theories have been propounded, some of which are outlined below, but none of which are intended to limit any of the embodiments described herein.

Rancidity in cereal products may be due to hydrolytic (enzymatic) or oxidative degradation reactions, or both, Often, hydrolysis may predispose products to subsequent oxidative rancidity. Nature has provided a number of protective features in seeds to prevent rancidity and spoilage, enabling seeds to survive periods of adverse conditions before attaining an appropriate environment for germination and growth. Rancidity is less likely to develop when lipid materials, for example, seed oil, are unable to interact with reactants or catalysts such as air and enzymes. One protective feature in cereal grains is the provision of separate compartments for storing lipids and enzymes so that they cannot interact.

Milling cereal grains involves breaking down the separate compartments, bran, germ and endosperm, such that the lipid and enzymatic components of the grain are able to interact, greatly increasing the development of rancidity. Increasing milling to reduce grittiness caused by bran particles tends to increase surface area, reduce natural encapsulation of lipids, and increase interaction between the lipids and enzymatic components thereby increasing the development of rancidity.

Thus, high-extraction flours, that is, those containing substantial amounts of bran and germ, are less stable than white flours. Prolonged storage of high-extraction flours often leads to the development of rancidity. Rancidity includes adverse quality factors arising directly or indirectly from reactions with endogenous lipids, producing a reduction in baking quality of the flour, undesirable tastes and odors, and/or unacceptable functional properties. A main reason for the development of rancidity in high-extraction flours is the enzymatic degradation of unstable natural oils. Rich supplies of unstable natural oils are contained in the germ portion of grains used to make high-extraction flours. White flours, on the other hand, contain little or no unstable natural oils or fats because they are made predominantly from the endosperm portion of grains and are generally substantially free of bran and germ.

Another reason rancidity is a greater problem in products derived from bran and germ-containing flour is that bran and germ contain the enzymes involved in enzyme-catalyzed lipid degradation. One of the enzymes, lipase, causes hydrolytic rancidity in milled products of sound, ungerminated wheat. Lipase is found almost exclusively in the bran component. The other key lipid degrading enzyme, lipoxygenase (LPO), is present almost exclusively in the germ and also is involved in the development of rancidity. Thus, bran-containing wheat flours or graham flours are much more susceptible to the development of rancidity than are white flours which contain little or no bran and germ.

Enzyme-catalyzed lipid degradation that occurs in high extraction wheat flour, causing rancidity in such flour, is believed to occur by the action of lipase followed by the action of LPO. When lipase, the enzyme found almost exclusively in the bran portion of the grain, is activated during milling, it reacts with unstable oils naturally occurring in the grain and breaks down the unstable oils to free fatty acids (FFA). This process may take weeks or even months. Then, LPO, the enzyme found almost exclusively in the germ portion of the grain, oxidizes FFA in the presence of oxygen, producing volatile breakdown products such as peroxides that, in turn, generate rancid aldehydes. In the absence of moisture, oxidation of FFA is also a very slow process and can take up to several weeks until noticeable amounts of rancid aldehydes can be detected. However, in the presence of moisture, or water, that is normally added to wheat flour in large amounts during the dough work-up stage, enzyme catalyzed oxidation of free fatty acids tends to proceed to a great extent very quickly, causing formation of large amounts of rancid aldehydes in a matter of just a few minutes.

### A Solution to Rancidity and the Related Problems

In reference to the problem of rancidity and the related problems with flour instability, various processes are disclosed for making stabilized whole grain flours containing natural proportions of bran, germ, and endosperm, at high production rates or throughput even with very fine particle size, such as production of a whole grain wheat flour in which not less than 98 % passes through a U.S. Wire 70 sieve (210 microns). In various embodiments, the stabilized whole grain flours are produced with low degrees of starch damage due to abrasion and low degrees of starch gelatinization due to heat and moisture treatment. Such stabilized whole wheat flours exhibit dough and baking functionalities, and particle sizes approaching those of white refined wheat flour. They may be used in the consistent mass production of highly machinable, sheetable doughs for making baked goods such as cookies, crackers, and snacks with excellent oven spread and appearance, and a non-gritty mouthfeel.

In various embodiments, stabilized whole grain flours, such as a very finely ground whole wheat flour, and a very finely ground stabilized bran component exhibit unexpectedly low sodium carbonate-water sorption, and an unexpectedly long shelf life, with unexpectedly low free fatty acid contents and hexanal contents at 1 month or more under accelerated storage conditions. A high level of enzyme inactivation is achieved, while retaining unexpectedly high levels of essential nutrients, such as antioxidants and vitamins that are lost with high temperature stabilization treatments. Furthermore, acrylamide formation is controlled to unexpectedly low levels. The disclosures of copending cases U.S. Patent Application Publication No. 20070292583, and International Patent Application Publication No. WO/2007/149320 each to Haynes et al, relate to such subject-matter.

One aspect of the invention provides methods for the high speed production of a finely ground stabilized bran component, such as a wheat component highly enriched in bran, and a finely ground stabilized whole grain flour containing the stabilized bran component, such as a stabilized whole grain wheat flour containing the stabilized wheat bran component, without substantially damaging starch or adversely affecting baking functionality. Production of three fractions, and separation of ground bran and germ which is sufficiently fine for the end product whole grain flour or bran component so as to avoid repeated grinding of bran and germ increases throughput, avoids starch damage and reduces release of enzymes such as lipase and lipoxygenase which may be present therein from the grinding or milling, which can cause rancidity. The milling, grinding and the stabilization process provide a substantial reduction in lipase activity and lipoxygenase activity, and unexpectedly low free fatty acid, hexanal and acrylamide formation. Furthermore, an unexpectedly high retention of natural nutrients, such as vitamins and antioxidants in the stabilized bran component and stabilized whole grain flour, such as stabilized whole grain wheat flour, is achieved. The grinding and milling conditions and the stabilization conditions do not adversely affect dough machinability or baking functionality of the stabilized whole grain flour even though fine whole grain flour particle sizes are obtained. The stabilized bran component has a low content of starch with a low iodine binding ratio, low starch damage and starch gelatinization, and low solvent retention capacity (SRC) even though
fine bran component particle sizes are obtained. The finely ground whole grain wheat flour, which contains natural proportions of endosperm, bran and germ as in the intact grain, has unexpectedly low solvent retention capacity (SRC), low starch damage and low degree of gelatinization, and an unexpectedly long shelf life.

In accordance with an inventive aspect, only a small portion of the endosperm of the whole grain flour, such as whole grain wheat flour, is subjected to grinding in the presence of the bran and germ, and only portions of the bran and germ are subjected to multistage grinding in order to reduce starch damage. Also, only that small portion of endosperm is subjected to stabilization by heating, in order to substantially reduce starch gelatinization. However, at least a substantial portion of the bran and germ of the whole grain flour, such as whole wheat flour, is subjected to stabilization by heating, in order to substantially reduce lipase and lipoxygenase activity. A whole grain product can be made from the stabilized whole grain flour, such as stabilized whole grain wheat flour, having an unexpectedly superior non-gritty texture, and cookie oven spread. In embodiments of the invention, production rates for the fine ground stabilized whole grain flour, such as stabilized whole grain wheat flour, may be at least 30,000 lbs/hr, (13607771.1 g/hr) preferably at least about 45,000 lbs/hr. (20411656.65 g/hr)

The three fractions employed include two bran and germ fractions and an endosperm fraction, which are obtained by milling whole cereal grains in breaking operations, smooth rolling operations and sifting operations. Only one of the three fractions or streams, a coarse bran and germ fraction is subjected to grinding. The two remaining fractions, an endosperm fraction and a low ash, fine bran and germ fraction are not subjected to grinding. The low ash, fine bran and germ fraction is sufficiently fine so that it does not need to be subjected to grinding thereby reducing starch damage and increasing production with reduced grinding equipment load. The low ash fine bran and germ fraction is obtained from smooth rolling operations and sifting operations where grinding by grinding mills is not employed. The ground coarse bran and germ fraction, and the low ash, fine bran and germ fraction may be combined, subjected to stabilization, and the stabilized bran and germ fraction may be combined with the endosperm fraction to obtain a stabilized whole grain flour.

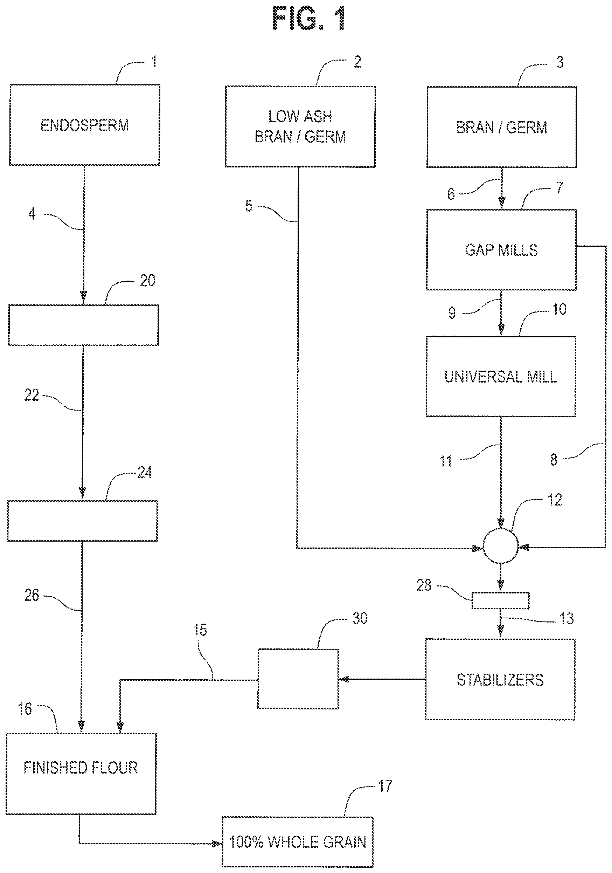

As shown schematically in FIG. 1, stabilized whole grain flour may be produced by milling whole grains to obtain an endosperm fraction 1 or stream 4, a low ash fine bran and germ fraction 2 or stream 5, and a coarse bran and germ fraction 3 or stream 6. The coarse bran and germ fraction 3 is ground without substantially damaging starch of the coarse bran and germ fraction 3 to obtain a first ground coarse bran and germ fraction 8 and a second ground coarse bran and germ fraction 11. The low ash fine bran and germ fraction 2 which is obtained by milling the whole grains is not ground thereby reducing starch damage and increasing throughput or production of the whole grain stabilized flour 17.

In a preferred embodiment, each of the first ground coarse bran and germ fraction 8, the second ground coarse bran and germ fraction 11, and the low ash fine bran and germ fraction 2 may have a fine particle size distribution substantially the same as the particle size distribution of the endosperm fraction 1. For example, each of fractions 2, 8, and 11 has a particle size distribution of 0% by weight on a No. 35 (500 micron) U.S. Standard Sieve, and less than or equal to about 20% by weight, preferably less than or equal to about 10 or more preferably 5% by weight on a No. 70 (210 micron) U.S. Standard Sieve.

The low ash fine bran and germ fraction 2, the first ground coarse bran and germ fraction 8, and the second ground coarse bran and germ fraction 11 may be transported through the use of conventional piping and conveying equipment, and combined using conventional mixing and conveying equipment, such as a screw conveyer, to obtain a combined fine bran and germ fraction 12. The combined fine bran and germ fraction 12 may stabilized in a stabilizer operation 14 to obtain a stabilized combined fine bran and germ fraction 15. The stabilized fine bran and germ fraction 15 may be combined with the endosperm fraction 1 using conventional mixing and conveying equipment 16, such as a screw conveyer, to obtain a stabilized whole grain flour 17.

The stabilized whole grain flour 17 has a particle size distribution of 0% by weight on a No. 35 (500 micron) U.S. Standard Sieve, and less than or equal to about 20% by weight, preferably less than or equal to about 10 or 5% by weight on a No. 70 (210 micron) U.S.
In a further embodiment of the invention, the stabilized whole grain flour 17 may have a particle size distribution of up to about 100% by weight through a No. 70 (210 micron) U.S. Standard Sieve. Also, the stabilized whole grain flour 17 may also have a particle size distribution of at least 75% by weight, preferably at least 85% by weight, for example from about 90% by weight to about 98% by weight, less than or equal to 149 microns and less than or equal to 5% by weight greater than 250 microns.

### Production of the Three Fractions

In one embodiment for making a stabilized whole grain flour, such as stabilized whole grain wheat flour, and a stabilized bran component, whole cereal grains may be milled to obtain the endosperm fraction 1, the low ash fine bran and germ fraction 2, and the coarse bran and germ fraction 3.

In another embodiment, the endosperm fraction 1 may have a particle size distribution of 0 % by weight on a No. 35 (500 micron) U.S. Standard Sieve, and less than or equal to about 20% by weight, preferably less than or equal to about 5% by weight on a No. 70 (210 micron) U.S. Standard Sieve. The endosperm fraction 1 may also have a particle size distribution of at least about 65% by weight, for example at least about 75% by weight, preferably at least about 85% by weight having a particle size of less than or equal to 149 microns, and less than or equal to about 5% by weight having a particle size of greater than 250 microns. The endosperm fraction 1 may have, on a solids basis, a starch content of from about 85% by weight to about 95% by weight starch, and an ash content of from about 0.5% by weight to about 0.6% by weight ash, based upon the weight of the endosperm fraction 1. The amount of germ present in the endosperm fraction 1 may be about the same relative amount to the bran as it is in the intact grain. The amount of the endosperm fraction 1 may be from about 60% by weight to about 80% by weight, generally from about 60% by weight to about 75% by weight, preferably from about 60% by weight to about 69% by weight, most preferably from about 65% by weight to about 68% by weight, based upon the total weight of the endosperm fraction 1, the low ash fine bran and germ fraction 2, and the coarse bran and germ fraction 3, or the weight of the whole grain.

In a further embodiment, the low ash fine bran and germ fraction 2 may have a particle size distribution of less than or equal to 15% by weight, preferably less than or equal to 12% by weight, most preferably 0 % by weight on a No. 35 (500 micron) U.S. Standard Sieve, and less than or equal to about 40% by weight, for example less than or equal to about 35% by weight, preferably less than or equal to about 20% by weight, most preferably less than or equal to about 10% by weight on a No. 70 (210 micron) U.S. Standard Sieve. The low ash fine bran and germ fraction has a particle size distribution of at least 65% by weight, preferably at least about 75% by weight, most preferably at least about 85% by weight having a particle size of less than or equal to 149 microns, and less than or equal to 10% by weight, preferably less than or equal to about 7% by weight, most preferably less than or equal to about 5% by weight having a particle size of greater than 250 microns. The low ash fine bran and germ fraction 2 may have, on a solids basis, a starch content of from about 10% by weight to about 75% by weight, preferably about 20% by weight to about 70% by weight, more preferably about 30% by weight to about 50% by weight starch, and an ash content of above 0.6% by weight, generally from about 0.75% by weight to about 2.0% by weight ash, based upon the weight of the low ash fine bran and germ fraction 2. The amount of germ present in the low ash fine bran and germ fraction 2 may be about the same relative amount to the bran as it is in the intact grain. The amount of the low ash fine bran and germ fraction 2 may be from about 3% by weight to about 15% by weight, preferably from about 5% by weight to about 10% by weight, based upon the total weight of the endosperm fraction 1, the low ash fine bran and germ fraction 2, and the coarse bran and germ fraction 3, or the weight of the whole grain.

The coarse bran and germ fraction 3 has a particle size distribution of at least 75 % by weight having a particle size of greater than or equal to 500 microns, less than or equal to 5% by weight having a particle size of less than 149 microns, and 15% by weight to 25% by weight having a particle size of less than 500 microns but greater than or equal to 149 microns. The coarse bran and germ fraction 3 may have, on a solids basis, a starch content of from about 10% by weight to about 40% by weight, and an ash content of above 2% by weight, based upon the weight of the coarse bran and germ fraction 3. The amount of germ present in the coarse bran and germ fraction 3 may be about the same relative amount to the bran as it is in the intact grain. The amount of the coarse bran and germ fraction 3 may be from about 10% by weight to about 37% by weight, for example from about 22% by weight to about 28% by weight, based upon the total weight of the endosperm fraction 1, the low ash fine bran and germ fraction 2, and the coarse bran and germ fraction 3, or the weight of the whole grain.

Accordingly, in one embodiment, milling of the whole grain, such as wheat, yields about 60% by weight to about 80% by weight, generally about 60% by weight to about 75 % by weight, preferably about 60% by weight to about 69 % by weight, from about 3% by weight to about 15% by weight, preferably from about 5% by weight to about 10% by weight of the low ash fine bran and germ fraction 2, and from about 10% by weight to about 37% by weight, for example from about 22% by weight to about 28% by weight of coarse bran and germ fraction 3, based upon the weight of the whole grain, with the weight percentages for the three fractions adding up to 100% by weight.

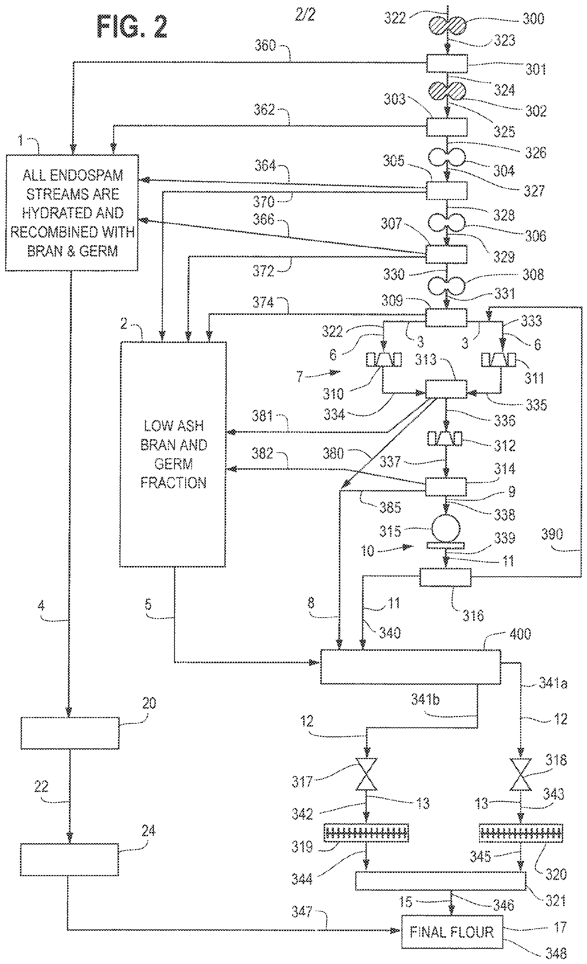

In another embodiment, the endosperm fraction 1, the low ash fine bran and germ fraction 2, and the coarse bran and germ fraction 3 for making a stabilized whole grain flour, such as stabilized whole grain wheat flour, and a stabilized bran component, may be obtained from whole cereal grains 322 as shown in FIG. 2. The whole cereal grains 322 may be tempered or untempered, but are preferably untempered, raw whole cereal grains, which have been cleaned by washing with water. Whole cereal grains with moisture contents of from about 8% to about 15% by weight may be employed, with moisture contents of about 10% by weight to about 14.5% by weight being preferred for milling and/or grinding purposes, and moisture contents of about 12.5% by weight to about 13.5% by weight being particularly preferred. If there is too little moisture in the grains, the grains may undesirably shatter and create damaged starch. Too high an amount of moisture may render the grains susceptible to excessive starch gelatinization and may also cause the grains to be difficult to mill and/or grind. For these reasons, grain moisture contents of from about 10% by weight to about 14.5% by weight are preferred just prior to the steps of milling or grinding. If the moisture content of the grains is too low, moisture may be added to the dry grains prior to the steps of milling or grinding to increase the moisture content to an acceptable level. Moisture addition may be achieved in conventional manner by tempering the grains by spraying their surfaces with water and permitting them to soak. Natural whole grains such as wheat berries generally have a moisture content of from about 10% by weight to about 14.5% by weight. Accordingly, in a preferred embodiment, it is not necessary to temper the whole berries to achieve a desired moisture content for the steps of milling or grinding,

Whole grains contain primarily the endosperm, bran, and germ, in diminishing proportions, respectively. In whole wheat grains, for example, at field moisture of about 13 % by weight, the endosperm or starch is about 83 % by weight, the bran is about 14.5 % by weight, and the germ is about 2.5 % by weight, based upon the weight of the intact grain. The endosperm contains the starch, and is lower in protein content than the germ and the bran. It is also low in crude fat and ash constituents. The bran (pericarp or hull) is the mature ovary wall which is beneath the cuticle, and comprises all the outer cell layers down to the seed coat. It is high in non-starch-polysaccharides, such as cellulose and pentosans. The bran or pericarp tends to be very tough due to its high fiber content and imparts a dry, gritty mouthfeel, particularly when present in large particle sizes. It also contains most of the lipase and lipoxygenase of the grain and needs to be stabilized. As the extent of the grinding or milling increases, the bran particle size approaches the particle size of the starch, making the bran and starch harder to separate. Also, starch damage tends to increase due to more mechanical energy input, and abrasiveness of the bran compared to the endosperm, and rupturing of the starch granules. Also, mechanically damaged starch tends to be more susceptible to gelatinization. The germ is characterized by its high fatty oil content. It is also rich in crude proteins, sugars, and ash constituents. The germ is preferably subjected to the stabilization with the bran to inactivate any lipase and lipoxygenase which may present therein from the grinding or milling, while avoiding substantial destruction of the natural nutrients.

As shown in FIG. 2, the production of the three fractions 1, 2, and 3 can include conducting, via conventional piping and conveying equipment, a quantity of whole grains 322 such as wheat, through a plurality of sets of break rolls or roller mills, and smooth rolls and sifters piping to provide milled grains. As more break rolls are employed more starch or endosperm is released, and the bran tends to remain in larger, coarser particles than the endosperm. During the breaking operation the bran particles tend to flatten while the endosperm tends to fragment into individual starch granules. The milled grains may be sifted through sifters, screeners or classifiers to collect particles with a first fine particle distribution and/or further particle size distributions as needed. The first fine particle size distribution and other distributions retain particles with a coarse particle size distribution for further milling and grinding and likewise particles finer than the first particle size distribution are not subjected to said second grinding stage to produce a ground coarse fraction. In preferred embodiments of the invention, the milling of the whole grains 322 may include subjecting untempered whole grains or berries to four or more breaking and rolling operations and four or more sifting operations. As shown in FIG. 2, the whole grains or 322 may be subjected to a plurality of breaking operations, 300, 302, a plurality of rolling operations 304, 306, 308, and a plurality of sifting operations 301, 303, 305, 307, 309 to obtain the endosperm fraction 1, low ash fine bran and germ fraction 2, and coarse bran and germ fraction 3, 332, 333. The sifters 301, 303, 305, 307, 309 are alternatingly arranged in series with the breaking rolls 300, 302, and smooth rolls 304, 306, 308 as shown in FIG. 2.

The output streams 323, 325, 327, 329, and 330 from break rolls and smooth rolls 300, 302, 304, 306, 308, respectively, are generally progressively increasingly enriched in bran as endosperm is removed by sifters 301, 303, 305, 307, and 309, respectively. The sifter coarser, or overs output streams 324, 326, 328, 330, and 332/333 from sifters 301, 303, 305, 307, and 309, respectively may be generally increasingly enriched in bran coarser and have been subjected to progressively more size reduction in rollers without the use of a grinding mill.

In another inventive aspect, a stabilized bran component having bran, germ and starch, with the amount of bran being at least about 50% by weight, and the amount of starch being from about 10% by weight to about 40% by weight, based upon the weight of the stabilized bran component is provided with a fine particle size distribution of 0 % by weight on a No. 35 (500 micron) U.S. Standard Sieve, and less than or equal to about 20% by weight on a No. 70 (210 micron) U.S. Standard Sieve.

As shown in FIG. 2, the endosperm fraction 1 may be produced by breaks 300 and 302, each of which may include two sets of break rolls, and smooth rolls 304, 306, but not the final smooth rolls 308, and by sifting operations 301, 303, 305, and 307, but not sifting operation 309. As shown in FIG. 2, sifter finer output streams 360, 362, 364, and 366 from sifters 301, 303, 305, and 307, respectively contribute to the production of the endosperm fraction 1. In embodiments of the invention, dull corrugations on each roll of each pair of break rolls may be employed to reduce dispersion of endosperm upon breaking of the grains, reduce starch damage during the breaking operations, and to attain a larger particle size distribution for the fractions.

The low ash bran and germ fraction 2, as shown in FIG. 2, may also be produced by smooth rolls 304, 306, 308 and sifting operations 305, 307, 309, but is not produced by breaks 300, 302, or their respective sifting operations 301 and 303, As shown in FIG. 2, sifter fine output streams 370, 372, and 374, from sifters 305, 307, and 309, respectively contribute to the production of the low ash bran and germ fraction 2. Generally, the sifter fine output streams 370, 372, may be coarser than the sifter finer output streams 360, 362, respectively, from the sifter operations 305 and 307 and may be obtained from different screens within the same sifter operation. As shown in FIG. 2, the sifter fine output stream 374 from sifter 309 contributes to the low ash bran and germ fraction 2, but the sifter coarser or overs output streams 332 and 333 from sifting operation 309 make up the coarse bran and germ fraction 3. The low ash bran and germ fraction may also be produced from the stream 381 produced following sifting operation 313 downstream of gap mills 310, 311 or from the stream 382 produced following sifting operation 314 downstream of gap mill 312.

The output stream 331 from the last set of smooth rolls 308 is input to the sifter 309 for obtaining the coarse bran and germ fraction 3. In embodiments of the invention, the output stream 331 from the last set of smooth rolls 308 may have a particle size distribution which is about the same or coarser than the particle size distribution of the coarse bran and germ fraction 3, and about the same or lower starch content than the coarse bran and germ fraction 3 due to removal of finer particles as stream 374 by sifter 309, For example, smooth roller 308 output stream 331 which is fed into sifter 309 may have a particle size distribution of at least about 75 % by weight having a particle size of greater than or equal to 500 microns, less than or equal to about 5% by weight having a particle size of less than 149 microns, and about 15% by weight to about 25% by weight having a particle size of less than 500 microns but greater than or equal to 149 microns. Also, smooth roller 309 output stream 331 may have, on a solids basis, a starch content of from about 10% by weight to about 40% by weight, based upon the weight of the output stream 331. The amount of germ present in the output stream 331 may be about the same relative amount to the bran as it is in the intact grain. The amount of the output stream 331 may be from about 18% by weight to about 37% by weight, preferably from about 20% by weight to about 30% by weight, based upon the total weight of the endosperm fraction 1, the low ash fine bran and germ fraction 2, and the coarse bran and germ fraction 3, or the weight of the whole grain.

The sifter coarser or overs output from sifting operation 309 may be one stream 3 or a plurality of streams 332 and 333 which may be obtained by splitting the coarser or overs output stream 3 evenly into two streams 332 and 333 for grinding in a plurality of gaps mills in accordance with a preferred embodiment.

### Grinding -of the Coarse Bran and Germ Fraction

The retained or recovered coarse bran and germ fraction 3, 332, 333 is subjected to grinding in a plurality of grinding mills to substantially reduce grittiness without substantially damaging the starch present in the coarse fraction by machine abrasion or by abrasion between the bran particles and the starch particles.

As shown in FIGS. 1 and 2, the grinding of the coarse bran and germ fraction 3, 332, 333 to obtain a first ground coarse bran and germ fraction 8, and a second ground coarse bran and germ fraction 11, 340 includes a first grinding stage 7 and a second grinding stage 10, wherein the first grinding stage comprises grinding by particle-to-particle collisions, and the second grinding stage comprises grinding by mechanical size reduction. Under the first grinding stage, grinding can be accomplished by any apparatus which reduces the particle size through particle-to-particle collisions, including but not limited to whirl milling, air classifiers, jet mills, gap mills and tornado in a can. Under the second grinding stage, grinding can be accomplished by any apparatus that mechanically reduces the size of the particles, such as for example a hammermill, cone mill, universal mill or a Fitz mill. The first grinding stage 7 produces both the first ground coarse bran and germ fraction 8, and a first stage ground coarse fraction 9, 338. The first stage ground coarse fraction 9, 338 is subjected to the second grinding stage 10 to obtain the second ground coarse fraction 11, 340. The first ground coarse bran and germ fraction 8 is sufficiently fine so that it is not subjected to the second grinding stage 10.

In another embodiment, the first ground coarse bran and germ fraction 8 may generally have about the same as or slightly larger particle size distribution compared to the second ground coarse bran and germ fraction 11, 340. Also, the first ground coarse bran and germ fraction 8 may generally have a higher starch content and its quantity may generally be substantially larger than those of the second ground coarse bran and germ fraction 11,340.

In a further embodiment, the first ground coarse bran and germ fraction 8 may have a particle size distribution of less than or equal to 15% by weight, preferably less than or equal to 12% by weight, most preferably 0 % by weight on a No. 35 (500 micron) U.S. Standard Sieve, and less than or equal to about 40% by weight, for example less than or equal to about 35% by weight, preferably less than or equal to about 20% by weight, most preferably less than or equal to about 10% or 5% by weight on a No. 70 (210 micron) U.S. Standard Sieve. Also, in embodiments the first ground coarse bran and germ fraction 8 may have a particle size distribution of at least about 75 % by weight, preferably at least about 85% by weight having a particle size of less than or equal to 149 microns, and less than or equal to about 15% by weight, preferably less than equal to about 5% by weight having a particle size of greater than 250 microns.

The first ground coarse bran and germ fraction 8 may have, on a solids basis, a starch content of from about 15% by weight to about 45% by weight, based upon the weight of the first ground coarse bran and germ fraction 8. The amount of germ present in the first ground coarse bran and germ fraction 8 may be about the same relative amount to the bran as it is in the intact grain. The amount of the first ground coarse bran and germ fraction 8 may be from about 85% by weight to about 97% by weight, based upon the weight of the coarse bran and germ fraction 3.

In yet another embodiment, the second ground coarse bran and germ fraction 11,340 may have a particle size distribution of less than or equal to 15% by weight, preferably less than or equal to 12% by weight, most preferably 0 % by weight on a No. 35 (500 micron) U.S. Standard Sieve, and less than or equal to about 40% by weight, for example less than or equal to about 35% by weight, preferably less than or equal to about 20% by weight, most preferably less than or equal to about 5% by weight on a No. 70 (210 micron) U.S. Standard Sieve. Also, in embodiments the second ground coarse bran and germ fraction 11, 340 may have a particle size distribution of at least 60% by weight, for example at least about 75 % by weight, preferably at least about 85% by weight having a particle size of less than or equal to 149 microns, and less than or equal to about 25% by weight, for example less than or equal to about 10% by weight, preferably less than equal to about 5% by weight having a particle size of greater than 250 microns, and up to about 25% by weight having a particle size of greater than 149 microns but less than or equal to 250 microns.

The second ground coarse bran and germ fraction 11, 340 may have, on a solids basis, a starch content of from about 10% by weight to about 40% by weight, based upon the weight of the second ground coarse bran and germ fraction 11, 340. The amount of germ present in the second ground coarse bran and germ fraction 11, 340 may be about the same relative amount to the bran as it is in the intact grain. The amount of the second ground coarse bran and germ fraction 11, 340 may be from about 3% by weight to about 15% by weight, preferably from about 5% by weight to about 10% by weight, based upon the weight of the coarse bran and germ fraction 3.

In an embodiment, the first stage ground coarse bran and germ fraction 9, 338 although rather finer than the coarse bran and germ fraction, the former may generally have a substantially larger particle size distribution compared to both the first ground coarse bran and germ fraction 8 and the second ground coarse bran and germ fraction 11, 340. Also, the first stage ground coarse bran and germ fraction 9, 338 may generally have a lower starch content and its quantity may generally be substantially smaller than those of the first ground coarse bran and germ fraction 8 due to removal of finer particles and endosperm by sifters 313 and 314 for production of the first ground coarse bran and germ fraction 8. Also, the first stage ground coarse bran and germ fraction 9, 338 may generally have a lower starch content and its quantity may generally be about the same as or lower compared to those of the second ground coarse bran and germ fraction 11, 340 due to removal of the coarser bran particles by sifter 316 for recycling back to the first stage grinding 7.

In another inventive aspect, the first stage ground coarse bran and germ fraction 9, 338 may have a particle size distribution of about 30% by weight to about 60% by weight having a particle size of greater than or equal to 500 microns, less than or equal to about 10% by weight having a particle size of less than 149 microns, and about 30% by weight to about 70% by weight having a particle size of less than 500 microns but greater than or equal to 149 microns.

The first stage ground coarse bran and germ fraction 9, 338 may have, on a solids basis, a starch content of from about 5% by weight to about 25% by weight, based upon the weight of the first stage ground coarse bran and germ fraction 9, 338. The amount of germ present in the first stage ground coarse bran and germ fraction 9, 338 may be about the same relative amount to the bran as it is in the intact grain, The amount of the first stage ground coarse bran and germ fraction 9,338 may be from about 3% by weight to about 15% by weight, preferably from about 5% by weight to about 10% by weight, based upon the weight of the coarse bran and germ fraction 3.

As shown in FIG. 2, the first grinding stage 7 preferably includes grinding the coarse bran and germ fraction 3, 332 and 333 in one or more "particle-to-particle collision" mills, preferably placed in series and/or parallel with one another as needed to achieve a particular throughput. In one embodiment, a pair of gap mills 310, 311 arranged in parallel with each other and in series with a third gap mill 312. The pair of gap mills 310, 311 arranged in parallel produce a first gap mill output stream 334 from a first gap mill 310 and a second gap mill output stream 335 from a second gap mill 311, and the third gap mill produces a third gap mill output stream 337. The first and second gap mill output streams 334, 335 may be sifted in sifting operation 313 to obtain an input stream 336 to the third gap mill 312. The third gap mill output stream 337 may be sifted in a sifting operation 314 to obtain the first stage ground coarse fraction 9, 338. The sifting in sifting operation 313 of the first and second gap mill output streams 334, 335 also contributes as sifter 313 output stream 380 to the production of the first ground coarse fraction 8. In addition, the sifting in sifting operation 314 of the third gap mill output stream 337 contributes as sifter 314 output stream 385 to the production of the first ground coarse fraction 8. As shown in FIG. 2, a gap mill recycle loop is not employed from any of the three gap mills 310, 311, 312.

As shown in FIGS. 1 and 2, the second grinding stage 10 preferably includes grinding the first stage ground coarse fraction 9, 338 in a mill that reduces the particles mechanically such as an impact mill, for example a hammer mill, cone mill, a Fitz mill or preferably a universal mill 10, 315 to obtain the second ground coarse fraction 11, 340. The output 339 from the mechanical size-reducing mill 10, 315 may optionally be sifted in sifting operation 316 to obtain the second ground coarse fraction stream 11, 340, and an optional recycle stream 390 for recycling larger particles back to the first and second gap mills 310, 311 of first grinding stage 7 for further grinding. In embodiments of the invention, the recycle stream 390 and sifting operation 316 may not be employed,

The coarse bran and germ fraction stream 332 which feeds into gap mill 310, and the coarse bran and germ fraction stream 333 which feeds into gap mill 311 may each have the same particle size distribution of at least about 75 % by weight having a particle size of greater than or equal to 500 microns, less than or equal to about 5% by weight having a particle size of less than 149 microns, and about 15% by weight to about 25% by weight having a particle size of less than 500 microns but greater than or equal to 149 microns. The two streams 332 and 333 may also each have, on a solids basis, a starch content of from about 10% by weight to about 40% by weight, and an ash content of above 2% by weight, based upon the weight of the stream 332 or 333. The amount of germ present in each stream 332, 333 may be about the same relative amount to the bran as it is in the intact grain. The amount of each coarse bran and germ traction stream 332, 333 may each be about one half the amount given for coarse bran and germ fraction 3 which was from about 10% by weight to about 37% by weight, for example from about 22% by weight to about 28% by weight, based upon the total weight of the endosperm fraction 1, the low ash fine bran and germ fraction 2, and the coarse bran and germ fraction 3, or the weight of the whole grain.

In embodiments of the invention, the first gap mill output stream 334 and the second gap mill output stream 335 may each have a particle size distribution of from about 5% by weight, preferably from about 10% by weight to about 40% by weight having a particle size of greater than or equal to 500 microns, about 30% by weight to about 70% by weight, preferably to about 60% by weight having a particle size of less than 149 microns, and about 5% by weight to about 30% by weight having a particle size of less than 500 microns but greater than or equal to 149 microns, and a starch content of from about 10% by weight to about 40% by weight starch. Also, the amount of each coarse bran and germ fraction stream 332, 333 may be about one half the amount of the coarse bran and germ fraction 3.

The input stream 336 to the third gap mill 312 may generally have a coarser particle size and lower starch content than those of the first and second gap mill output streams 334 and 335 because fines are removed by sifting operation 313 as stream 380 for production of the first ground coarse bran and germ fraction 8. In embodiments of the invention, the input stream 336 to the third gap mill 312 may have a particle size distribution of about 40 % by weight to about 70% by weight having a particle size of greater than or equal to 500 microns, about 0% by weight to about 10% by weight having a particle size of less than 149 microns, and about 25% by weight to about 55% by weight having a particle size of less than 500 microns but greater than or equal to 149 microns, and a starch content of from about 5% by weight, preferably from about 10% by weight to about 30% by weight starch, based upon the weight of input stream 336. Also, the amount of the third gap mill 312 input stream 336 may be about 6% by weight to about 30% by weight, preferably about 10% by weight to about 20% by weight, based upon the weight of the coarse bran and germ fraction 3.

The third gap mill output stream 337 may generally have a finer particle size and higher starch content than those of the first stage ground coarse bran and germ fraction 9, 338 which is input to the mechanical size reduction - mill 315 because fines are removed by sifting operation 314 as stream 385 for production of the first ground coarse bran and germ fraction 8 by combination with stream 380 from stream 313. In embodiments of the invention, the third gap mill output stream 337 may have a particle size distribution of about 5% by weight to about 25 by weight, preferably to about 20% by weight having a particle size of greater than or equal to 500 microns, from about 25% by weight, preferably from about 30% by weight to about 60% by weight having a particle size of less than 149 microns, and about 45% by weight to about 65% by weight having a particle size of less than 500 microns but greater than or equal to 149 microns, and a starch content of from about 5% by weight, preferably from about 10% by weight to about 30% by weight starch, based upon the weight of output stream 337. Also, the amount of the third gap mill output stream 337 may be about 6% by weight to about 30% by weight, preferably about 10% by weight to about 20% by weight, based upon the weight of the coarse bran and germ fraction 3.

The output stream 339 from the mechanical size - reduction mill 315 prior to sifting in sifting operation 316 may generally have a coarser particle size distribution and lower starch content than those of the second ground coarse bran and germ fraction 11, 340, and the combined fine bran and germ fraction 12, 341a, 341b, and the stabilized combined fine bran and germ fraction 15, 344, 345, and stabilized whole grain flour because the mechanical size - reduction mill output stream 339 may contain coarse bran for recycle to the gap mills of first grinding stage 7. In embodiments of the invention, the output stream 339 from the mechanical size - reduction mill 315, prior to sifting operation 316 to obtain the second ground coarse bran and germ fraction 11, 340, may have a starch content of from about 5% by weight to about 25% by weight, and a particle size distribution of at least about 25% by weight, for example at least about 55% by weight, preferably at least about 60% by weight, more preferably at least about 65% by weight, most preferably at least about 75% by weight, for example at least about 85% by weight having a particle size of less than or equal to 149 microns, and less than or equal to about 10% by weight, preferably less than equal to about 5% by weight having a particle size of greater than 250 microns, and up to about 45% by weight having a particle size of greater than 149 microns but less than or equal to 250 microns. Also, the amount of the mechanical size - reduction mill output stream 339 may be about 3% by weight to about 15% by weight, preferably about 5% by weight to about 10% by weight, based upon the weight of the coarse bran and germ fraction 3.

In embodiments of the invention, the mechanical size - reduction mill recycle stream 390 from sifter 316 back to the gap mills 310, 311 may have a particle size distribution of at least about 85% by weight greater than 475 microns, for example at least about 95% by weight greater than 500 microns.

In a preferred embodiment, a commercially available gap mill, such as a Bauermeister Gap Mill (Bauermeister, Inc., Memphis, Tenn.) may be employed. The Bauermeister gap mill is designed for fine grinding and includes an adjustable grinding gap between a conical shaped rotor and a corrugated baffle. The coarse bran and germ fraction 6, 332, 333, may be continuously conveyed to the inlet of gap mills 310, 311 and the fraction 336 from sifter 313 may be continuously conveyed to the inlet of the gap mill and the ground fractions 334, 335, and 337 may then be discharged out of the bottoms of the gap mills by gravity.

In a preferred embodiment, a commercially available universal mill may be employed, such as a Bauermeister Universal Mill (Bauermeister, Inc., Memphis, Tenn,). The Bauermeister Universal Mill is designed for maximum grinding flexibility for fine and ultra-fine particle size reduction, with interchangeable grinding elements, with grinding ability to the 325 mesh (44 micron) range and below, and capacities to over 30 tons per hour. Optional grinding elements which may be employed are a turbo mill for efficient grinding to a high degree of fineness, a pin mill for fine grinding of materials with high fat content, a pinned disc mill for somewhat coarser grinding, and material containing hard or large particles, a cross beater mill for coarse to medium-fine grinding, and sieve ring assemblies available with a variety of different size screens and grinding jaws. The first stage ground course bran and germ fraction 9, 338 may be continuously conveyed to the inlet of the Universal Mill, and the ground fraction 11,339 may then be discharged from the output end of the universal mill for optional sifting in sifting operation 316.

### Combining of the Bran Fractions

As shown in FIGS. 1 and 2, the second ground coarse bran and germ fraction 11, 340, may be combined in a conventional mixing and conveying device, such as a screw conveyer 400, with the low ash fine bran and germ fraction 2, and the first ground coarse bran and germ fraction 8 to obtain a combined fine bran and germ fraction 12. The combined fine bran and germ fraction 12 may be split for hydration in a plurality of hydrators, preferably about evenly into two combined fine bran and germ fraction streams 341a, 341b for hydration in parallel hydrators 317, 318.

In embodiments of the invention, the three bran fractions 2, 8, and 11 which are combined to obtain the combined fine bran and germ fraction 12 are each preferably obtained with about the same fine particle size distribution. In embodiments of the invention, the combined fine bran and germ fraction 12, 341a, 341b may have a particle size distribution of less than or equal to 15% by weight, preferably less than or equal to 12% by weight, most preferably 0 % by weight on a No. 35 (500 micron) U.S. Standard Sieve, and less than or equal to about 40% by weight, for example less than or equal to about 35% by weight, preferably less than or equal to about 20% by weight, most preferably less than or equal to about 10% by weight on a No. 70 (210 micron) U.S. Standard Sieve. Also, in embodiments the combined fine bran and germ fraction 12, 341a, 341b may have a particle size distribution of at least about 65% by weight, for example at least about 75% by weight, preferably at least about 85% by weight having a particle size of less than or equal to 149 microns, and less than or equal to about 15% by weight, for example less than or equal to about 10% by weight, preferably less than equal to about 5% by weight having a particle size of greater than 250 microns, and up to about 40% by weight, for example up to about 25% by weight having a particle size of greater than 149 microns but less than or equal to 250 microns.

The combined fine bran and germ fraction 12, 341 a, 341b may have, on a solids basis, a starch content of from about 10% by weight to about 60% by weight, for example from about 1 0% by weight to about 45% by weight, based upon the weight of the combined fine bran and germ fraction 12, 341 a, 341 b. The amount of germ present in the second ground coarse bran and germ fraction 11, 340 may be about the same relative amount to the bran as it is in the intact grain. The amount of the combined fine bran and germ fraction 12, 341a, 341b may be from about 20% by weight to about 40% by weight, generally from about 25% by weight to about 40% by weight, preferably from about 31% by weight to about 40% by weight, most preferably from about 32% by weight to about 35% by weight, based upon the total weight of the endosperm fraction 1, the low ash fine bran and germ fraction 2, and the coarse bran and germ fraction 3, or the weight of the whole grain.

In embodiments of the invention, the combined fine bran and germ fraction after hydration 13, 342, 343, and the stabilized combined fine bran and germ fraction 15, 344, 345, 346 may have the same particle size distributions, starch contents, and amounts as those for the combined fine bran and germ fraction prior to hydration 12, 341 a, 341 b.

### Hydration of the Endosperm and the Combined Bran and Germ Fractions

In an aspect of the present invention, the shelf life of whole grain flour may be extended and improved flour functionality may be obtained through hydrating and cooling during the milling process or flour production. Whole grain flour contains increased free fatty acid (FFA) due to high lipid content and enzyme activity such as lipase. Higher storage temperature accelerates the increase in free fatty acids. The increased FFA tends to oxidize during flour or bran component storage and produces undesirable rancid flavor and therefore shortens the flour shelf life. Whole grain flour also tends to have lower moisture (11% or lower) compared to refined flour, which generally has a moisture content of 13% by weight to 14% by weight, due to the additional grinding of bran material. The decreased moisture negatively impacts the whole grain flour or bran component in two aspects: 1) it increases the FFA oxidation; and 2) it changes the flour functionality.

In an embodiment the moisture content in whole grain flour (made from tempered or un tempered wheat) may be increased, for example from 10% by weight up to 14% by weight to substantially reduce FFA oxidation, and improve functionality for flour based product production. The increased flour moisture also improves the efficiency of the enzyme inactivation process and reduces FFA generation during flour storage. Whole grain flour produced in accordance with the hydration process of present process has improved shelf life and functionality. Also, in other embodiments, cooling the flour during milling, to a temperature of less than about 32.2°C (90°F) helps to maintain the flour FFA lower than about 2500 ppm for at least 30 days, to further improve the whole grain flour stability.

For example, whole grain flour, both enzyme reduced and un-reduced, when flour is hydrated to a moisture content above 13% by weight, the oxidation (measured by hexanal production) may be almost none existent. Also, for example, when flour moisture content is increased from 11% by weight to 14% by weight, the lipase activity decreases from 110u/g/hr to 70 u/g/hr during a subsequent enzyme inactivation process. Additionally, if the flour temperature is cooled down to 32.2°C (90°F) or lower, preferably 29.4°C (85°F) or lower, the flour FFA is maintained lower than 2500 ppm for at least 30 days. Also, cookie spread increases with the final whole grain flour moisture, which indicates the flour quality is improved for cookie baking.

However, when hydrating an endosperm fraction, to increase whole grain flour stability, the endosperm fraction tends to lump. When hydrating the bran and germ fraction alone to provide the desired final moisture content in the whole grain flour, excessively high water contents for the bran germ fraction may be needed in view of the large amount of endosperm or size of the endosperm fraction compared to the amount of bran and germ fraction. Hydrating the bran and germ fraction to excessively high amounts may cause clumping or may adversely affect stabilization effectiveness for inactivation of lipase and lipoxygenase or may promote free fatty acid production. Accordingly, in embodiments of the invention, hydration of both the endosperm and one or more of the bran fractions and cooling may be employed to achieve a shelf stable whole grain flour moisture content without adversely affecting shelf stability while avoiding lumping of the endosperm fracture and bran and germ fractions.

In embodiments of the invention for the production of a stabilized whole grain flour and extending the shelf life of the stabilized whole grain flour without substantially damaging starch, whole grains may be subjected to a plurality of breaking and sifting operations and grinding operations to obtain an endosperm fraction. The endosperm fraction may be hydrated by spraying with mixing to a moisture content which is sufficiently low to avoid lumping of the endosperm fraction. The hydrated endosperm fraction may be combined with a stabilized hydrated fine bran and germ fraction having a moisture content which is sufficiently high so that the resulting stabilized whole grain flour has a moisture content of 10% by weight to 14.5% by weight, preferably from 12% by weight to 14% by weight, more preferably from 12.5% by weight to 13.5% by weight, based upon the weight of the stabilized whole grain flour.

In embodiments of the invention, the endosperm fraction 1 or stream 4, 347 may be hydrated to obtain a moisture content of the endosperm fraction of from 10% by weight to 14.5% by weight, preferably from 12% by weight to 14% by weight, more preferably from 12.5% by weight to 13.5% by weight, based upon the weight of the endosperm fraction prior to combining with the stabilized combined fine bran and germ fraction 15, 344, 345.

As shown in FIG. 2 the hydration of the endosperm fraction 1, 4 may be conducted in a hydrator 20. The hydrator 20 may be a conventional continuous vessel, such as continuous mixer, or rotating drum for spraying and stirring the endosperm fraction 1, 4 to obtain a substantially homogeneously hydrated endosperm fraction 22.

As shown in FIG. 2, in preferred embodiments the hydration of the fine bran and germ fraction may be conducted in a plurality of hydrators 317, 318. The hydrators may be conventional continuous vessels, such as continuous mixers, or rotating drums for spraying and stirring the combined fine bran and germ fraction 12, 341 a, 341 b to obtain a substantially homogeneously hydrated combined fine bran and germ fraction 13, 342, 343. In embodiments of the invention, the combined fine bran and germ fraction streams 12, 341a, 341b may be hydrated to such an extent so that the hydrated combined fine bran and germ fractions 13, 342, 343 have a moisture content of about 10% by weight to about 20% by weight, based upon the weight of the hydrated fine bran and germ fraction 13, 342, 343 prior to stabilization.

As shown in FIG. 2, in preferred embodiments, the stabilized hydrated fine bran and germ fraction 15, 344, 345 may be cooled in a bran and germ cooling unit 321 to a temperature of less than about 32.2°C (90°F), preferably less than about 29.4°C (85°F) prior to combining with the hydrated endosperm fraction 347. The cooling unit 321 may be a conventional continuous cooling device such as a shell and tube heat exchanger or jacketed continuous mixer, or cooling tunnel.

In embodiments of the invention, the endosperm fraction 1, 4 may be cooled in an endosperm cooling unit 24 to a temperature of less than about 32.2°C (90°F), preferably less than about
29.4°C (85°F) to obtain a cooled endosperm fraction 26, 347 prior to combining with the stabilized hydrated fine bran and germ fraction 15, 344, 345. The endosperm cooling unit 24 may be a conventional continuous cooling device such as a shell and tube heat exchanger or jacketed continuous mixer, or cooling tunnel

In embodiments of the invention, the hydrated endosperm fraction 22, 347 and the stabilized hydrated fine bran and germ fraction 15, 344, 345 may be separately cooled and then combined, or they may be mixed together and then cooled to a temperature of less than about 32°F (90°F), preferably less than about 29°F (85°F) to obtain a stabilized hydrated whole grain flour 17, 348 with extended shelf life.

### Stabilization of the Combined Bran and Germ Fraction

In various embodiments of the invention, stabilization of the coarse bran and germ fraction 3, 6, 332, 333 to inactivate lipase and lipoxygenase may be performed before, during, or after the steps of milling or grinding of the coarse bran and germ fraction 3, 6, 332, 333. In embodiments of the invention, stabilization may be by any combination of inactivation by heating, before, during and after steps of milling and grinding. The stabilization or inactivation is preferably performed after grinding of the coarse fraction 3, 6, 332, 333. The stabilization is most preferably performed on the combined fine bran and germ fraction 12, 341a, 341b which is obtained by combining the low ash fine bran and germ fraction 2, the first ground coarse bran and germ fraction 8, and the second ground coarse bran and germ fraction 11, 340, and the stabilization or inactivation is performed by heating. In embodiments of the invention, the stabilization may be performed before, after, during, or without hydration of the bran and germ fraction. In preferred embodiments, the stabilization is conducted after hydration of the combined fine bran and germ fraction 12, 341a, 341b, or upon the hydrated combined fine bran and germ fraction 13, 342, 343.

Irrespective of when it is conducted, stabilization of the coarse fraction may be achieved by heating the coarse fraction under temperature conditions, moisture content, and
treatment times which are sufficient to at least substantially inactivate the lipase, and the more easily inactivated lipoxygenase. The moisture content of the coarse fraction during the heat treatment stabilization should preferably be high enough to avoid substantial acrylamide production. Formation of acrylamide is believed to result after a Strecker degradation of asparagine and methionine in the presence of dicarbonyl Maillard browning products. High moisture contents are believed to inhibit acrylamide formation because water is more nucleophilic than asparagine and reduces the activity of the primary amino group on the asparagine. Lower stabilization temperatures and shorter stabilization times also result in lower acrylamide production. However, increasing the moisture content of the combined fine bran and germ fraction 12, 341a, 341b during stabilization so as to reduce acrylamide production tends to increase starch gelatinization or may require excessive poststabilization drying to reduce the risk of mold growth. The moisture content of the combined fine bran and germ fraction 12, 341a, 341b during stabilization should not be so high so as to result in excessive starch gelatinization or to require extensive drying to achieve a shelf stable moisture content. In embodiments of the invention, the moisture content of the combined fine bran and germ fraction 12, 341a, 341b subjected to the stabilization maybe from about 10% by weight to about 20% by weight, based upon the weight of the hydrated fine bran and germ fraction prior to stabilization,

During the stabilization it is preferred that the coarse fraction neither gain nor lose moisture. In some embodiments the fraction may lose from about 10 % by weight to about 70 % by weight moisture, for example from about 1 5% by weight to about 25 % by weight moisture during stabilization. In other embodiments, the coarse fraction may gain moisture, in the same amounts, as a result of steam injection throughout the stabilization process. However, moisture loss and moisture gain may be controlled in known manner so that the moisture content of the fraction during stabilization is within the desired range for controlling acrylamide production, gelatinization, and drying requirements, and lipase activity, and preferably which is sufficient so that when combined with the hydrated endosperm, the resulting stabilized whole grain flour 17 has a moisture content of 10% by weight to 14.5% by weight, preferably 12% by weight to 14% by weight, more preferably 12.5% by weight to 13.5% by weight based upon the weight of the stabilized whole grain flour 17.

In embodiments of the invention, the moisture content of the bran fraction may be controlled by tempering the grains such that exterior portions are moistened without substantially moistening interior portions thereof. Tempering methods which can be used to accomplish a surface or bran moistening include soaking the whole grains for limited time periods in a bath or vat, for example. In other embodiments, the whole grain may be surface sprayed with water and permitted to temper. Tempering times of from about 10 minutes to about 24 hours may be employed according to some embodiments of the invention. Tempering the grains for a longer time period is not desirable because it may result in deep penetration of water into the grain, moistening the interior portion of the grain.

In other embodiments, one or more bran and germ fractions, preferably the combined fine bran and germ fraction, rather than or in addition to the whole grain may be moistened so as to achieve a desired moisture content in the combined fine bran and germ fraction. Post-milling or post-grinding hydration of the combined fine bran & germ content is preferred over tempering of the whole germ.

Natural whole wheat berries generally have a moisture content of from about 10% by weight to about 14.5 % by weight. Accordingly, tempering or post-grinding hydration may be optional and used when needed. Accordingly, in embodiments of the invention, moistening or tempering of the whole grains or moistening of a bran and germ fraction to achieve a desired moisture content for stabilization may not be needed or employed.

While lower stabilization temperatures and shorter stabilization times help to reduce acrylamide production, starch gelatinization, and vitamin and antioxidant destruction, the lower temperatures reduce the amount of lipase and lipoxygenase which is destroyed. In embodiments of the invention, the stabilization temperature may be from about 100°C to about 140°C, preferably from about 115°C to about 125°C. The stabilization temperature may be measured with a temperature probe inserted into and centrally positioned within the lot of the treated coarse fraction. In embodiments of the invention, the heat treatment time may be from about 0.25 minutes to about 12 minutes, preferably from about 1 minute to about 7 minutes, generally with the longer treatment times being employed with the lower temperatures and lower moisture contents.

In embodiments of the invention, the stabilization temperature and stabilization time, and moisture contents may be controlled so that starch gelatinization resulting from the stabilization in the stabilized ground or milled coarse fraction or bran component may be less than about 25 %, preferably less than about 10%, most preferably less than about 5%, as measured by differential scanning calorimetry (DSC). The low degree of starch gelatinization and low degree of starch damage achieved in the present invention are exemplified by a starch melting enthalpy of greater than about 4 J/g, preferably greater than about 5 J/g, based upon the weight of starch in the stabilized bran component or ground coarse fraction, as measured by differential scanning calorimetry (DSC), at a peak temperature of from about 65 °C to about 70 °C. In embodiments the stabilized bran component may have a starch melting enthalpy of greater than about 2 J/g, based upon the weight of the stabilized ground coarse fraction, as measured by differential scanning calorimetry (DSC), at a peak temperature of from about 60°C to about 65°C. Generally, starch gelatinization occurs when: a) water in a sufficient amount, generally at least about 30% by weight, based upon the weight of the starch, is added to and mixed with starch and, b) the temperature of the starch is raised to at least about 80°C (176°F), preferably 100°C (212°F) or more. The gelatinization temperature depends upon the amount of water available for interaction with the starch. The lower the amount of available water, generally, the higher the gelatinization temperature. Gelatinization may be defined as the collapse (disruption) of molecular orders within the starch granule, manifested in irreversible changes in properties such as granular swelling, native crystallite melting, loss ofbirefringence, and starch solubilization. The temperature of the initial stage of gelatinization and the temperature range over which it occurs are governed by starch concentration, method of observation, granule type, and heterogeneities within the granule population under observation. Pasting is the second-stage phenomenon following the first stage of gelatinization in the dissolution of starch. It involves increased granular swelling, exudation of molecular components (i.e. amylose, followed by amylopectin) from the granule, and eventually, total disruption of the granules. See Atwell et al., "The Terminology And Methodology Associated With Basic Starch Phenomena," Cereal Foods World, Vol. 33, No. 3, pgs. 306- 311 (March 1988).

The low degree of starch gelatinization and low amount of starch damage due to abrasion during grinding may be measured by the sodium carbonate-water solvent retention capacity (SRC sodium carbonate). Solvent retention capacity (SRC) may be measured by mixing a sample of the ingredient or component, such as the stabilized ground coarse fraction or bran component, or a stabilized whole-grain wheat flour, having a weight (A), e.g., about 5 g, with a large excess of water or other solvent, such as an aqueous solution of sodium carbonate (e.g. 5 % by weight sodium carbonate) and centrifuging the solvent-flour mixture. The supernatant liquid may then be decanted and the sample may be weighed to obtain the weight of the centrifuged wet sample (B), wherein the SRC value is calculated by the following equation: SRC value= ((BA)/A))x 100. In embodiments of the invention, the stabilized ground or milled coarse fraction or bran component may have a sodium carbonate-water solvent retention capacity (SRC sodium carbonate) of less than about 200 %, preferably less than about 180 %.

Although starch gelatinization, acrylamide production, and vitamin and antioxidant destruction are substantially limited, the heat stabilization and moisture content control achieve unexpectedly superior inactivation of lipase and lipoxygenase for whole grain flours and bran components having very small particle sizes. These two components are believed to be primarily responsible for enzyme catalyzed rancidity of whole grain flour. In embodiments of the invention, a stabilized bran component which includes a ground or milled, heat treated coarse fraction may have a lipase activity of less than about 3, preferably less than about 2, most preferably less than about 1 micromole butyrate free acid formed per hour per 0.1 gram of the stabilized bran component or stabilized ground or milled coarse fraction, wet basis or dry basis. In embodiments of the invention, this may be a reduction from a lipase activity of about 4 to 6 micromole butyrate free acid formed per hour per 0.1 gram of the unstabilized bran component or unstabilized ground fraction, or lipase reduction of at least about 25%. Most preferably, both lipase and lipoxygenase activities are completely eliminated. In embodiments of the invention, known analytical techniques may be employed to determine whole grain flour and bran component properties or characteristics, such as acrylamide content, lipase activity, enthalpy, SRC, free fatty acid content, and hexanal content. Known analytical techniques which may be employed herein are disclosed in U.S. Patent Application Publication No. 20070292583, and International Patent Application Publication No. WO/2007/149320 each to Haynes et al. In preferred embodiments the lipase activity is preferably measured using a fluorescence method, which is a very sensitive method for the determination of lipase activity, in which heptanoyl esters of 4-methylumbelliferone (7-hydroxy∼ 4∼methylcoumarin or 4-MU) serve as fluorogenic substrates for lipase. Using such a method, the stabilized whole grain flours of the present invention may have a lipase activity of less than about 250 units/g/hour, preferably less than about 100 units/g/hour of the stabilized whole grain flour, where a unit is the number of micromoles (∼tm) of 4-methylumbelliferyl heptanonate (4-MUH) hydrolyzed per hour per gram of stabilized whole grain flour. Also, using such a method a stabilized bran component of the present invention may have a about 250 units/g/hour, of the stabilized combined fine bran and germ fraction, where a unit is the number of micromoles (lam) of 4-methylumbelliferyl heptanonate (4-MUH) hydrolyzed per hour per gram of stabilized combined fine bran and germ fraction. Also, acrylamide content may be limited to less than or equal to about 150 ppb, preferably less than or equal to about 100 ppb, based upon the weight of the stabilized bran component or stabilized coarse fraction. Natural antioxidants are maintained so that the stabilized coarse fraction may have an antioxidant free radical scavenging capacity of not less than about 150 micromoles Trolox equivalents per gram. Vitamin retention, such as retention of Vitamins E, B1 and B2 may be at least about 80% by weight, based upon the vitamin content in the bran component before stabilization.

The stabilization and hydration method employed certain aspects of the invention may be performed without substantial or any alteration of the particle size distribution of the fraction or component subjected to the stabilization or hydration.

Stabilization may performed on a batch, semi-batch or continuous basis, with the latter being preferred. Known heating vessels, such as batch cookers, mixers, rotating drums,
continuous mixers, and extruders may be employed for heating the coarse fraction to stabilize it. The heating apparatus may be jacketed vessels equipped with heating or cooling jackets for external control of the stabilization temperature and/or steam injection nozzles for direct injection of moisture and heat into the coarse fraction. In other embodiments, infrared (IR) radiation or energy may be employed to heat the coarse bran fraction to stabilize it. In a preferred embodiment, a Bepex stabilizer manufactured by Bepex, or a Lauhoff bran cooker, manufactured by Lauhoff may be employed for stabilization of a fraction on a continuous basis. In embodiments where grinding or milling is performed simultaneously with heat stabilization, heated rollers may be employed. In such embodiments, the temperature and moisture content may be adjusted upward to shorten the stabilization time to conform to a desired grinding time for achieving a targeted particle size distribution.

In other embodiments of the invention, at least one, or all, of the retained or recovered ground bran and germ fractions may be stabilized or enzymatically inactivated using an edible stabilizing agent or treatment alone or in combination with thermal treatment. Exemplary of edible stabilizing agents which may be employed in a stabilizing effective amount to a stabilizing extent prior to mixing of a bran and germ fraction with the fine endosperm fraction are edible alkali bisulfates, bisulfites, metabisulfites, and metabisulfates, such as sodium metabisulfite, organic acids, such as sorbic acid, sulfur dioxide, cysteine, thioglycolic acid, glutathione, hydrogen sulfide, other edible reducing agents, and mixtures thereof.

In embodiments of the invention, the heat-treated fraction may be permitted to cool in ambient air. In other embodiments, cooling of a ground or milled bran and germ fraction or bran component after heat treatment may optionally be controlled to further minimize undesired gelatinization of starch. Generally, no further significant gelatinization occurs in the stabilized bran component at temperatures lower than about 60°C. Then the heat-treated coarse fraction may be cooled to room temperature, or about 25°C. In embodiments of the invention, the average cooling rate used to achieve a surface temperature of about 25°C may be a temperature decrease of from about 1 °C/min to about 3°C/min.

The cooling rate should be selected to minimize further gelatinization of starch in the coarse fraction after heat-treatment, but should not be so fast as to prevent further inactivation of lipase and LPO, if needed. If no further inactivation of lipase or LPO is desired, cooling may be conducted to quickly reduce the temperature of the heat-treated coarse fraction to less than about 60°C.

In embodiments of the invention, coolers which may be used for the processes of the invention include cooling tubes or cooling tunnels through which the heat-treated coarse fraction passes under the force of gravity or on a conveyor device. While the heat-treated coarse fraction passes through the device, cooled air may be passed over and through the coarse fraction or bran component. The spent cooling air may then be collected or suctioned off, for example, by a hood, and further treated in a cyclone separator. A preferred cooler supplies cooling air to various regions along the length of a cooling tube or tunnel. Preferably, the cooling air is passed through a chilling device prior to contacting the heat-treated coarse fraction to achieve a temperature which is lower than that of ambient air.

After cooling, the moisture content of the heat-treated coarse fraction may optionally be further reduced by drying. Drying temperatures of less than about 60°C are preferred so that no further gelatinization of starch occurs during the drying process. In accordance with the present invention, drying temperatures may range from about 0°C to about 60°C. However, drying at ambient temperature is less expensive than drying at a cooler temperature and will prevent further gelatinization of the starch in the heat-treated coarse fraction during drying. Drying is preferably conducted in an atmosphere having a low relative humidity, and may preferably be conducted in a reduced pressure atmosphere. If the heat treatment, hydration, and optional cooling achieve moisture contents within a desired range, no drying step is deemed necessary.

### Production of the Stabilized Whole Grain Flour

The stabilized bran component or stabilized combined fine bran and germ fraction may be combined with the endosperm fraction to obtain a stabilized whole grain flour, such as a stabilized whole grain wheat flour, of the present invention. The stabilized whole grain flour, such as stabilized whole grain wheat flour, includes bran, germ and endosperm, where only a portion of the endosperm has been subjected to heat stabilization but at least a substantial portion of the bran and germ have been subjected to stabilization by heating, and a substantial portion of the bran and germ are not subjected to grinding in a grinding mill. The stabilized bran component or stabilized combined fine bran and germ fraction are preferably derived from the same whole grains from which the endosperm fraction is derived. However, in other embodiments, the stabilized bran component or stabilized combined fine bran and germ fraction may be combined or blended with an endosperm fraction which is derived or obtained from a different source of grains. In each embodiment however, the stabilized bran component and the endosperm fraction are combined or blended so as to provide a stabilized whole grain flour which contains endosperm, bran and germ in the same or substantially the same relative proportions as they exist in the intact grain.

The stabilized bran fraction which comprises a ground or milled, heat treated coarse fraction comprising bran, germ and starch may be blended, combined, or admixed with the endosperm fraction using conventional metering and blending apparatus known in the art to obtain an at least substantially homogeneous stabilized whole grain flour.

The stabilized whole grain wheat flour has a lipase activity of a lipase activity of less than 250 units/g/hour, preferably less than about 100 units/g/hour of the stabilized whole grain flour, where a unit is the number of micromoles (∼tm) of 4-methylumbelliferyl heptanonate (4-MUH) hydrolyzed per hour per gram of stabilized whole grain The acrylamide content of the stabilized whole grain flour is less than 45 ppb, preferably less than about 30 ppb, based upon the weight of stabilized whole grain flour. The stabilized whole grain wheat flours has an unexpectedly low free fatty acid content of less than 10% by weight of total flour lipids after one month under accelerated storage at 95°C, or less than 3,000 ppm, based upon the weight of the stabilized whole grain flour. The stabilized whole grain wheat flours have an unexpectedly low hexanal content of less than 10 ppm after 1 month accelerated storage at 95°C, based upon the weight of the stabilized whole grain flour.

The moisture content of the stabilized whole grain flour, such as stabilized whole grain wheat flour, may range from about 10 % by weight to about 14.5 % by weight, based upon the weight of the stabilized whole grain flour, and the water activity may be less than about 0.7. In embodiments, the stabilized whole grain wheat flour may have a protein content of from about 10% by weight to about 14 % by weight, for example about 12 % by weight, a fat content of from about 1% by weight to about 3 % by weight, for example about 2 % by weight, and an ash content of from about 1.2 % by weight to about 1.7 % by weight, for example about 1.5 % by weight, each of the percentages being based upon the weight of the stabilized whole grain flour.

The stabilized whole grain flour, such as stabilized whole grain wheat flour, may have a substantial portion of starch which is non-gelatinized or essentially non-gelatinized because it comes from the fine fraction which does not undergo heat stabilization. A smaller portion of the starch may be partially gelatinized to a low degree, because it comes from the heat-treated coarse fraction or bran component. In embodiments of the invention, the stabilized whole grain flour, such as stabilized whole grain wheat flour, may have a low degree of starch gelatinization of less than about 25 %, preferably less than about 10 %, most preferably less than about 5 %, as measured by differential scanning calorimetry (DSC). The starch melting enthalpy of the starch contained in the stabilized whole grain wheat flour may be greater than about 4 J/g, preferably greater than about 5 J/g, based upon the weight of starch in the stabilized whole grain flour, as measured by differential scanning calorimetry (DSC), at a peak temperature of from about 65 °C to about 70 °C.

The stabilized whole grain wheat flour exhibits excellent baking functionality with a sodium carbonate-water solvent retention capacity (SRC sodium carbonate) of less than about 90%, preferably less than about 85 %, more preferably less than about 82%, for example from about 70 % to about 80 %. In embodiments of the invention, oven spread or cookie spread may be at least about 130 % of the original prebaked dough diameter, as measured according to the AACC 10-53 bench-top method.

The methods disclosed are applicable to any and all types of wheat. Although not limited thereto, the wheat berries may be selected from soft/soft and soft/hard wheat berries. They may comprise white or red wheat berries, hard wheat berries, soft wheat berries, winter wheat berries, spring wheat berries, durum wheat berries, or combinations thereof. Examples of other whole grains that may be processed in accordance with various or certain embodiments or aspects of this invention include, for example, oats, corn, rice, wild rice, rye, barley, buckwheat, bulgar, millet, sorghum, and the like, and mixtures of whole grains.

The methods disclosed provide an improved raw material stability and greater than one month shelf life, for example 2 months or more, under accelerated storage conditions, for a stabilized bran component or ingredient and for a stabilized whole grain flour, such as stabilized whole grain wheat flour. A more stable food product can be stored under similar conditions for a longer period of time than a less stable food product before going rancid. The presence of rancidity can be monitored and measured in a multiplicity of different manners, including sensory testing (e.g., taste and/or odor analysis), lipoxygenase or lipase activity level measurements, free fatty acid level measurements, and/or hexanal level measurements.

In other embodiments of the invention, the stabilized bran component or the stabilized whole grain flour, such as stabilized whole grain wheat flour, may be combined, admixed, or blended with refined wheat flour to obtain a fortified flour, product or ingredient, such as fortified wheat flour. The fortified wheat flour product may contain the stabilized bran component or the stabilized whole grain flour, such as stabilized whole grain wheat flour, in an amount of from about 14 % by weight to about 40 % by weight, for example from about 20 % by weight to about 30 % by weight, based upon the total weight of the fortified flour product, such as fortified wheat flour product.

The stabilized whole grain flour, such as stabilized whole grain wheat flour, may be employed to partially or completely replace refined wheat flour, or other flours, in a variety of food products. For example, in embodiments of the invention, at least about 10% by weight, at most 100 % by weight, for example from about 30% by weight to about 50 % by weight of the refined wheat flour, may be replaced by the stabilized whole grain wheat flour to increase nutritional values of refined wheat flour products with little, if any detriment to product appearance, texture, aroma, or taste.

The stabilized bran components and stabilized whole grain products, such as stabilized whole grain wheat products, obtained in the present invention can be packaged, stably stored, and subsequently or immediately further used in food production. The stabilized bran products and flour products are ready for further processing into the finished food products by adding water and other applicable food ingredients, mixing, shaping, and baking or frying, etc. Doughs containing the stabilized bran and whole grain flours, such as whole grain wheat flour, may be continuously produced and machined, for example sheeted, laminated, molded, extruded, or coextruded, and cut, on a mass production basis. The finished whole grain products (e.g., biscuits, cookies, crackers, snack bars, etc.) have a pleasant texture with the characteristics of a whole grain taste.

The stabilized bran components and stabilized whole-grain flours products, such as stabilized whole-grain wheat flour products, disclosed herein may be used in a wide variety of food products, The food products include farinaceous food products, and biscuit type products in particular, pasta products, ready-to-eat cereals, and confections. In one embodiment, the food products may be bakery products or snack foods. The bakery products may include cookies, crackers, pizza crusts, pie crusts, breads, bagels, pretzels, brownies, muffins, waffles, pastries, cakes, quickbreads, sweet rolls, donuts, fruit and grain bars, tortillas, and par-baked bakery products. The snack products may include snack chips and extruded, puffed snacks. The food product particularly may be selected from cookies, crackers, and cereal crunch bars. The cookies may be bar-type products, extruded, coextruded, sheeted and cut, rotary molded, wire cut, or sandwich cookies. Exemplary of cookies which may be produced include sugar wafers, fruit filled cookies, chocolate chip cookies, sugar cookies, and the like. The crackers may be fermented or non-fermented type crackers, and graham crackers. The baked goods produced in accordance with the methods disclosed may be crackers or cookies having a full fat content or they may be a reduced fat, tow-fat, or no-fat product.

In addition to water, cookie, cracker, and snack ingredients which may be admixed with the stabilized whole grain flour, such as stabilized whole grain wheat flour, of the present invention include enriched wheat flour, vegetable shortening, sugar, salt, high fructose corn syrup, leavening agents, flavoring agents and coloring agents. Enriched wheat flours which may be used include wheat flours enriched with niacin, reduced iron, thiamine mononitrate and riboflavin. Vegetable shortenings which may be used include those made of partially hydrogenated soybean oil. Leavening agents which may be used include calcium phosphate and baking soda. Coloring agents which may be used include vegetable coloring agents such as annatto extract and turmeric oleoresin,

Dough made in accordance with the methods disclosed include dough comprising various combinations of the aforementioned cookie, cracker, and snack ingredients. According to some embodiments, all of the foregoing ingredients are homogeneously admixed and the amount of water is controlled to form a dough of desired consistency. The dough may then be formed into pieces and baked or fried to produce products having excellent moisture, geometry, appearance, and texture attributes.

## Claims

1. A method for the production of stabilized whole grain flour comprising:
a) milling whole grains to obtain a separate endosperm fraction, a low ash fine bran and germ fraction separate from the endosperm, and a coarse bran and germ fraction separate from the endosperm fraction and the low ash fine bran and germ fraction,
wherein said endosperm fraction has an ash content of 0.5 wt. % to 0.6% wt. % and a particle size distribution of at least 65% by weight having a particle size of less than or equal to 149 microns, and less than or equal to 5% by weight having a particle size of greater than 250 microns,
said low ash fine bran and germ fraction has an ash content of 0.6 wt. % to 2.0 wt. % and a particle size distribution of at least 65% by weight having a particle size of less than or equal to 149 microns, and less than or equal to 10% by weight having a particle size of greater than 250 microns, and
said coarse bran and germ fraction has an ash content of above 2 wt. % and a particle size distribution of at least 75% by weight having a particle size of greater than or equal to 500 microns, less than or equal to 5% by weight having a particle size of less than 149 microns, and 15% by weight to 25% by weight, having a particle size of less than 500 microns but greater than or equal to 149 microns,
b) grinding said coarse bran and germ fraction without substantially damaging starch of the coarse bran and germ fraction to obtain a ground coarse bran and germ fraction, wherein said low ash fine bran and germ fraction is not ground,
c) stabilizing said low ash fine bran and germ fraction and said ground coarse bran and germ fraction by heating said low ash fine bran and germ fraction and said ground coarse bran and germ fraction, to obtain a stabilized fine bran and germ fraction, and
d) combining said stabilized fine bran and germ fraction with said endosperm fraction to obtain a stabilized whole grain flour having a particle size distribution of 0% by weight on a No. 35 (500 micron) U.S. Standard Sieve, and less than or equal to 20% by weight on a No. 70 (210 micron) U.S. Standard Sieve, wherein said low ash fine bran and germ fraction is from 3% by weight to 15% by weight and is not ground thereby reducing starch damage and increasing production efficiency.

2. A method as claimed in claim 1, wherein said endosperm fraction is from 60% by weight to 75% by weight, said low ash fine bran and germ fraction is from 3% by weight to 15% by weight, and said coarse bran and germ fraction is from 10% by weight to 37% by weight, said weight percentages being based upon the total weight of said endosperm fraction, said low ash fine bran and germ fraction and said coarse bran and germ fraction, and said weight percentages add up to 100% by weight.

3. A method as claimed in claim 1, wherein said endosperm fraction comprises from 85% by weight to 95% by weight starch, said low ash fine bran and germ fraction comprises from 10% by weight to 50% by weight starch, and said coarse bran and germ fraction comprises from 10% by weight to 40% by weight starch, and said low ash fine bran and germ fraction has a fine particle size distribution substantially the same as the particle size distribution of the endosperm fraction.

4. A method as claimed in claim 1, wherein said step of grinding said coarse bran and germ fraction further comprises the step of obtaining a first ground coarse bran and germ fraction and a second ground coarse bran and germ fraction.

5. A method as claimed in claim 4, wherein said low ash fine bran and germ fraction, said first ground coarse bran and germ fraction and said second ground coarse bran and germ fraction are combined to obtain a combined fine bran and germ fraction.

6. A method as claimed in claim 5, wherein said combined fine bran and germ fraction has a particle size distribution of at least 75% by weight having a particle size of less than or equal to 149 microns, and less than or equal to 15% by weight having a particle size of greater than 250 microns.

7. A method as claimed in claim 1, wherein said milling of the whole grains comprises subjecting the whole grains to a plurality of breaking operations, rolling operations, and sifting operations to obtain said endosperm fraction, low ash fine bran and germ fraction, and coarse bran and germ fraction.

8. A method as claimed in claim 7, wherein said plurality of breaking operations include the use of dull corrugations to reduce starch damage during the breaking operations and to attain a larger particle size distribution for said fractions.

9. A method as claimed in claim 1 wherein said endosperm fraction is hydrated to obtain a moisture content of from 10% by weight to 14.5% by weight, based upon the weight of said endosperm fraction, wherein said hydrated endosperm fraction is combined after cooling with said stabilized fine bran and germ fraction to obtain the stabilized whole grain flour.

10. A method as claimed in claim 9, wherein said endosperm fraction is cooled to a temperature of less than 32°C (90°F) to obtain a cooled endosperm fraction prior to combining with said stabilized fine bran and germ fraction.

11. A method as claimed in claim 10, wherein said stabilized fine bran and germ fraction is cooled to a temperature of less than 32°C (90°F) prior to combining with said cooled endosperm fraction.

12. A method as claimed in claim 1, wherein said low ash fine bran and germ fraction and said ground coarse bran and germ fraction are hydrated prior to stabilization.

13. A method as claimed in claim 1, wherein said low ash fine bran and germ fraction and said ground coarse bran and germ fraction are hydrated to a moisture content of 10% by weight to 20% by weight.

14. A method as claimed in claim 1, wherein the stabilized whole grain flour has a moisture content of 10% by weight to 14.5% by weight, based upon the weight of the stabilized whole grain flour.

15. A method as claimed in claim 1, wherein stabilizing of said low ash fine bran and germ fraction and said ground coarse bran and germ fraction to obtain a stabilized fine bran and germ fraction reduces the lipase activity to less than about 250 units/g/hour, of the stabilized fine bran and germ fraction, where a unit is the number of micromoles (∼tm) of 4-methylumbelliferyl heptanonate (4-MUH) hydrolyzed per hour per gram of stabilized fine bran and germ fraction.

16. A method as claimed in claim 1, wherein stabilizing of said low ash fine bran and germ fraction and said ground coarse bran and germ fraction avoids an acrylamide content of greater than 150 ppb, based upon the weight of said stabilized fine bran and germ fraction, wherein the stabilization comprises heating at a temperature of from 100°C to 140°C.

17. A method as claimed in claim 1, wherein said stabilized fine bran and germ fraction has a sodium carbonate-water solvent retention capacity (SRC sodium carbonate) of less than 200%, and the stabilized whole grain flour has a sodium carbonate-water solvent retention capacity (SRC sodium carbonate) of less than 90%, a free fatty acid content of less than 10% by weight of total flour lipids at three months or less than 3,000 ppm, based upon the weight of the stabilized whole grain flour, and a hexanal content of less than 10 ppm after 1 month accelerated storage at 95°C, based upon the weight of the stabilized whole grain flour.

18. The method of claim 1 for producing a stabilized whole grain flour without substantially damaging starch,
wherein the low ash fine bran and germ fraction is not subjected to further particle size reduction, and the coarse bran and germ fraction is subjected to further particle size reduction,
wherein said grinding said coarse bran and germ fraction uses a two stage grinding process, wherein a first grinding stage comprises particle-to-particle collisions and a second grinding stage comprises grinding by mechanical size reduction and wherein particles finer than a first particle fineness are not subjected to said second grinding stage, to produce a ground coarse bran and germ fraction,
wherein in step (c), said ground coarse bran and germ fraction and said low ash fine bran and germ fraction are stablised to obtain a stabilized fine bran and germ fraction which has a sodium carbonate-water solvent retention capacity of less than 200%, and
wherein said stabilized whole grain flour obtained in step (d) has a sodium carbonate-water solvent retention capacity of less than 90% and a hexanal content of less than 10 ppm after 1 month accelerated storage at 95°C, based upon the weight of the stabilized whole grain flour.

19. A method as claimed in claim 18,wherein said first grinding stage comprises grinding the coarse fraction in a gap mill, wherein a gap mill recycle loop is not employed, and wherein said second grinding stage comprises grinding in a universal mill.

20. The method of claim 1 for producing stabilized whole grain flour including endosperm, bran and germ, without substantially damaging starch comprising:
wherein said coarse bran and germ fraction has a residue of endosperm,
wherein in step (b) said coarse bran and germ fraction, including said endosperm residue in an amount of 5-10% of the endosperm in the whole grains, is ground to minimize starch damage and to produce the ground coarse bran and germ fraction,
further comprising hydrating said ground coarse bran and germ fraction and said low ash fine bran and germ fraction to a moisture content of 10% to 20% by weight, based upon the weight of the fraction,
wherein in step (c) up to 10% of said endosperm residue from said ground coarse bran and germ fraction is subjected to stabilization to avoid starch gelatinization, and 80-100 % of the bran and germ is subjected to stabilization to reduce lipase and lipxoygenase activity, to produce a stabilized whole grain flour which has a sodium carbonate- water solvent retention capacity of less than 90% and a hexanal content of less than 10 ppm after 1 month accelerated storage at 95°C, based upon the weight of the stabilized whole grain flour.

21. A heat-stabilized whole grain flour comprising an endosperm fraction having an ash content of 0.5 wt. % to 0.6% wt. %, a low ash fine bran and germ fraction having an ash content of 0.6 wt. % to 2.0 wt. %, and a coarse bran and germ fraction having an ash content of above 2 wt. %, the heat-stabilized whole grain flour having:
a) a lipase activity of less than 250 units/g hour of the stabilized whole grain flour, where a unit is the number of micromoles (jam) of 4-methylumbelliferyl heptanonate (4-MUH) hydrolyzed per hour per gram of stabilized whole grain flour,
b) an acrylamide content less than 45 ppb, based upon the weight of stabilized whole grain flour,
c) a sodium carbonate-water solvent retention capacity (SRC sodium carbonate) of less than 90%,
d) a free fatty acid content of less than 10% by weight of total flour lipids at three months or less than 3,000 ppm, based upon the weight of the stabilized whole grain flour, and
e) a hexanal content of less than 10 ppm after 1 month accelerated storage at 95°C, based upon the weight of the stabilized whole grain flour, and
a particle size distribution of 0% by weight on a No. 35 (500 micron) U.S. Standard Sieve, and less than or equal to about 10% by weight on a No. 70 (210 micron) U.S. Standard Sieve.

22. A heat-stabilized whole grain flour as claimed in claim 21, having a particle size distribution of at least 85% by weight through a No. 100 (149 micron) U.S. Standard Sieve, and less than or equal to 5% by weight greater than 250 microns.

23. A heat-stabilized whole grain flour as claimed in claim 21, which is a whole grain wheat flour.

## Patentansprüche

1. Verfahren zum Herstellen von stabilisiertem Vollkornmehl, umfassend:
a) Mahlen ganzer Körner, um eine abgetrennte Endospermfraktion, eine Fraktion von feiner Kleie mit wenig Asche und Keimling, von dem Endosperm abgetrennt, und eine Fraktion von grober Kleie und Keimling, von der Endospermfraktion abgetrennt, und die Fraktion von feiner Kleie mit wenig Asche und Keimling zu erhalten,
wobei die Endospermfraktion einen Aschegehalt von 0,5 Gew.-% bis 0,6 % Gew.-% und eine Teilchengrößenverteilung von mindestens 65 Gew.-% mit einer Teilchengröße von weniger als oder gleich 149 Mikrometer, und weniger als oder gleich 5 Gew.-% mit einer Teilchengröße von mehr als 250 Mikrometer aufweist,
wobei die Fraktion von feiner Kleie mit wenig Asche und Keimling einen Aschegehalt von 0,6 Gew.-% bis 2,0 Gew.-% und eine Teilchengrößenverteilung von mindestens 65 Gew.-% mit einer Teilchengröße von weniger als oder gleich 149 Mikrometer und weniger als oder gleich 10 Gew.-% mit einer Teilchengröße von mehr als 250 Mikrometer aufweist, und
wobei die Fraktion von grober Kleie und Keimling einen Aschegehalt von über 2 Gew.-% und eine Teilchengrößenverteilung von mindestens 75 Gew.-% mit einer Teilchengröße von mehr als oder gleich 500 Mikrometer, weniger als oder gleich 5 Gew.-% mit einer Teilchengröße von weniger als 149 Mikrometer, und 15 Gew.-% bis 25 Gew.-% mit einer Teilchengröße von weniger als 500 Mikrometer, aber mehr als oder gleich 149 Mikrometer aufweist,
b) Zermahlen der Fraktion von grober Kleie und Keimling, ohne die Stärke der Fraktion von grober Kleie und Keimling wesentlich zu schädigen, um eine zermahlene Fraktion von grober Kleie und Keimling zu erhalten, wobei die Fraktion von feiner Kleie mit wenig Asche und Keimling nicht zermahlen wird,
c) Stabilisieren der Fraktion von feiner Kleie mit wenig Asche und Keimling und der zermahlenen Fraktion von grober Kleie und Keimling durch Erhitzen der Fraktion von feiner Kleie mit wenig Asche und Keimling und der zermahlenen Fraktion von grober Kleie und Keimling, um eine stabilisierte Fraktion von feiner Kleie und Keimling zu erhalten, und
d) Kombinieren der stabilisierten Fraktion von feiner Kleie und Keimling mit der Endospermfraktion, um ein stabilisiertes Vollkornmehl mit einer Teilchengrößenverteilung von 0 Gew.-% auf einem US-Standardsieb Nr. 35 (500 Mikrometer) und weniger als oder gleich 20 Gew.-% auf einem US-Standardsieb Nr. 70 (210 Mikrometer) zu erhalten, wobei die Fraktion von feiner Kleie mit wenig Asche und Keimling von 3 Gew.-% bis 15 Gew.-% beträgt und nicht zermahlen ist, wodurch Stärkeschaden reduziert und die Produktionseffizienz erhöht wird.

2. Verfahren nach Anspruch 1, wobei die Endospermfraktion von 60 Gew.-% bis 75 Gew.-% beträgt, die Fraktion von feiner Kleie mit wenig Asche und Keimling von 3 Gew.-% bis 15 Gew.-% beträgt und die Fraktion von grober Kleie und Keimling von 10 Gew.-% bis 37 Gew.-% beträgt, wobei die Gewichtsprozentsätze auf das Gesamtgewicht der Endospermfraktion, der Fraktion von feiner Kleie mit wenig Asche und Keimling und der Fraktion von grober Kleie und Keimling bezogen ist, und wobei die Gewichtsprozentsätze sich auf 100 Gew.-% addieren.

3. Verfahren nach Anspruch 1, wobei die Endospermfraktion von 85 Gew.-% bis 95 Gew.-% Stärke umfasst, wobei die Fraktion von feiner Kleie mit wenig Asche und Keimling von 10 Gew.-% bis 50 Gew.-% Stärke umfasst, und die Fraktion von grober Kleie und Keimling von 10 Gew.-% bis 40 Gew.-% Stärke umfasst, und die Fraktion von feiner Kleie mit wenig Asche und Keimling eine Teilchengrößenverteilung aufweist, die im Wesentlichen die gleiche ist wie die Teilchengrößenverteilung der Endospermfraktion.

4. Verfahren nach Anspruch 1, wobei der Schritt des Zermahlens der Fraktion von grober Kleie und Keimling ferner den Schritt des Erhaltens einer ersten zermahlenen Fraktion von grober Kleie und Keimling und einer zweiten zermahlenen Fraktion von grober Kleie und Keimling umfasst.

5. Verfahren nach Anspruch 4, wobei die Fraktion von feiner Kleie mit wenig Asche und Keimling, die erste zermahlene Fraktion von grober Kleie und Keimling und die zweite zermahlene Fraktion von grober Kleie und Keimling kombiniert werden, um eine kombinierte Fraktion von feiner Kleie und Keimling zu erhalten.

6. Verfahren nach Anspruch 5, wobei die kombinierte Fraktion von feiner Kleie und Keimling eine Teilchengrößenverteilung von mindestens 75 Gew.-% mit einer Teilchengröße von weniger als oder gleich 149 Mikrometer und weniger als oder gleich 15 Gew.-% mit einer Teilchengröße von mehr als 250 Mikrometer aufweist.

7. Verfahren nach Anspruch 1, wobei das Mahlen der ganzen Körner ein Unterziehen der ganzen Körner einer Vielzahl von Aufbrechvorgängen, Walzvorgängen und Siebevorgängen umfasst, um die Endospermfraktion, Fraktion von feiner Kleie mit wenig Asche und Keimling und Fraktion von grober Kleie und Keimling zu erhalten.

8. Verfahren nach Anspruch 7, wobei die Vielzahl von Aufbrechvorgängen die Verwendung von stumpfen Wellenstrukturen zum Reduzieren von Stärkeschaden während der Aufbrechvorgänge und zum Erreichen einer größeren Teilchengrößenverteilung für die Fraktionen einschließt.

9. Verfahren nach Anspruch 1, wobei die Endospermfraktion hydratisiert wird, um einen Feuchtigkeitsgehalt von 10 Gew.-% bis 14,5 Gew.-%, bezogen auf das Gewicht der Endospermfraktion, zu erhalten, wobei die hydratisierte Endospermfraktion nach dem Abkühlen mit der stabilisierten Fraktion von feiner Kleie und Keimling kombiniert wird, um das stabilisierte Vollkornmehl zu erhalten.

10. Verfahren nach Anspruch 9, wobei die Endospermfraktion auf eine Temperatur von weniger als 32 °C (90 °F) gekühlt wird, um vor Kombinieren mit der stabilisierten Fraktion von feiner Kleie und Keimling eine gekühlte Endospermfraktion zu erhalten.

11. Verfahren nach Anspruch 10, wobei die stabilisierte Fraktion von feiner Kleie und Keimling vor Kombinieren mit der gekühlten Endospermfraktion auf eine Temperatur von weniger als 32 °C (90 °F) gekühlt wird.

12. Verfahren nach Anspruch 1, wobei die Fraktion von feiner Kleie mit wenig Asche und Keimling und die zermahlene Fraktion von grober Kleie und Keimling vor der Stabilisierung hydratisiert werden.

13. Verfahren nach Anspruch 1, wobei die Fraktion von feiner Kleie mit wenig Asche und Keimling und die zermahlene Fraktion von grober Kleie und Keimling auf einen Feuchtigkeitsgehalt von 10 Gew.-% bis 20 Gew.-% hydratisiert werden.

14. Verfahren nach Anspruch 1, wobei das stabilisierte Vollkornmehl einen Feuchtigkeitsgehalt von 10 Gew.-% bis 14,5 Gew.-% aufweist, bezogen auf das Gewicht des stabilisierten Vollkornmehls.

15. Verfahren nach Anspruch 1, wobei Stabilisieren der Fraktion von feiner Kleie mit wenig Asche und Keimling und der zermahlenen Fraktion von grober Kleie und Keimling zum Erhalten einer stabilisierten Fraktion von feiner Kleie mit wenig Asche und Keimling die Lipaseaktivität der stabilisierten Fraktion von feiner Kleie und Keimling auf weniger als etwa 250 Einheiten/g/Stunde reduziert, wobei eine Einheit die Anzahl an Mikromolen (∼tm) von 4-Methylumbelliferylheptanonat (4-MUH) ist, die pro Stunde pro Gramm der stabilisierten Fraktion von feiner Kleie und Keimling hydrolysiert wird.

16. Verfahren nach Anspruch 1, wobei Stabilisieren der Fraktion von feiner Kleie mit wenig Asche und Keimling und der zermahlenen Fraktion von grober Kleie und Keimling einen Acrylamidgehalt von mehr als 150 ppb, bezogen auf das Gewicht der stabilisierten Fraktion von feiner Kleie und Keimling, vermeidet, wobei die Stabilisierung Erhitzen bei einer Temperatur von 100 °C bis 140 °C umfasst.

17. Verfahren nach Anspruch 1, wobei die stabilisierte Fraktion von feiner Kleie und Keimling ein Natriumcarbonat-Wasser-Lösemittelrückhaltevermögen (solvent retention capacity) (SRC Natriumcarbonat) von weniger als 200 % aufweist und das stabilisierte Vollkornmehl ein Natriumcarbonat-Wasser-Lösemittelrückhaltevermögen (SRC Natriumcarbonat) von weniger als 90 %, einen Gehalt an freier Fettsäure von weniger als 10 Gew.-% an Gesamtmehllipiden bei drei Monaten, oder weniger als 3.000 ppm, bezogen auf das Gewicht des stabilisierten Vollkornmehls, und einen Hexanalgehalt von weniger als 10 ppm nach 1 Monat beschleunigter Lagerung bei 95 °C, bezogen auf das Gewicht des stabilisierten Vollkornmehls, aufweist.

18. Verfahren nach Anspruch 1 zum Herstellen eines stabilisierten Vollkornmehls, ohne Stärke wesentlich zu schädigen,
wobei die Fraktion von feiner Kleie mit wenig Asche und Keimling keiner weiteren Teilchengrößenreduktion unterzogen wird und die Fraktion von grober Kleie und Keimling weiterer Teilchengrößenreduktion unterzogen wird,
wobei das Zermahlen der Fraktion von grober Kleie und Keimling einen zweistufigen Zermahlungsprozess anwendet, wobei eine erste Zermahlungsstufe Teilchen-mit-Teilchen-Kollisionen und eine zweite Zermahlungsstufe Zermahlen durch mechanische Größenreduktion umfasst, und wobei Teilchen, die feiner sind als eine erste Teilchenfeinheit der zweiten Zermahlungsstufe nicht unterzogen werden, um eine Fraktion von grober Kleie und Keimling herzustellen,
wobei die zermahlene Fraktion von grober Kleie und Keimling und die Fraktion von feiner Kleie mit wenig Asche und Keimling in Schritt (c) stabilisiert werden, um eine stabilisierte Fraktion von feiner Kleie und Keimling, welche ein Natriumcarbonat-Wasser-Lösemittelrückhaltevermögen von weniger als 200 % aufweist, zu erhalten, und
wobei das in Schritt (d) erhaltene, stabilisierte Vollkornmehl ein Natriumcarbonat-Wasser-Lösemittelrückhaltevermögen von weniger als 90 % und nach 1 Monat beschleunigter Lagerung bei 95 °C einen Hexanalgehalt von weniger als 10 ppm aufweist, bezogen auf das Gewicht des stabilisierten Vollkornmehls.

19. Verfahren nach Anspruch 18, wobei die erste Zermahlungsstufe Zermahlen der groben Fraktion in einer Spaltmühle umfasst, wobei keine Spaltmühlenrückführschleife genutzt wird, und wobei die zweite Zermahlungsstufe Zermahlen in einer Universalmühle umfasst.

20. Verfahren nach Anspruch 1 zum Herstellen eines stabilisierten Vollkornmehls, einschließlich Endosperm, Kleie und Keimling, ohne Stärke wesentlich zu schädigen, umfassend:
wobei die Fraktion von grober Kleie und Keimling einen Endospermrückstand aufweist,
wobei die Fraktion von grober Kleie und Keimling, einschließlich des Endospermrückstands in einer Menge von 5-10 % des Endosperms in den ganzen Körnern, in Schritt (b) zermahlen wird, um Stärkeschaden zu minimieren und die zermahlene Fraktion von grober Kleie und Keimling herzustellen,
ferner umfassend Hydratisieren der zermahlenen Fraktion von grober Kleie und Keimling und der Fraktion von feiner Kleie mit wenig Asche und Keimling auf einen Feuchtigkeitsgehalt von 10 Gew.-% bis 20 Gew.-%, bezogen auf das Gewicht der Fraktion,
wobei in Schritt (c) bis zu 10 % des Endospermrückstands aus der Fraktion von grober Kleie und Keimling Stabilisierung unterzogen wird, um Stärkeverkleisterung zu vermeiden, und
80-100 % der Kleie und des Keimlings Stabilisierung unterzogen werden, um Lipase- und Lipoxygenaseaktivität zu reduzieren, um ein stabilisiertes Vollkornmehl, welches ein Natriumcarbonat-Wasser-Lösemittelrückhaltevermögen von weniger als 90 % und nach 1 Monat beschleunigter Lagerung bei 95 °C einen Hexanalgehalt von weniger als 10 ppm, bezogen auf das Gewicht des stabilisierten Vollkornmehls, aufweist, zu produzieren.

21. Hitzestabilisiertes Vollkornmehl, umfassend eine Endospermfraktion mit einem Aschegehalt von 0,5 Gew.-% bis 0,6 % Gew.-%, eine Fraktion von feiner Kleie mit wenig Asche und Keimling mit einem Aschegehalt von 0,6 Gew.-% bis 2,0 Gew.-% und eine Fraktion von grober Kleie und Keimling mit einem Aschegehalt von über 2 Gew.-%, wobei das hitzestabilisierte Vollkornmehl Folgendes aufweist:
a) eine Lipaseaktivität von weniger als 250 Einheiten/g Stunde des stabilisierten Vollkornmehls, wobei eine Einheit die Anzahl an Mikromolen (jam) von pro Stunde pro Gramm von stabilisiertem Vollkornmehl hydrolysiertem 4-Methylumbelliferylheptanonat (4-MUH) ist,
b) einen Acrylamidgehalt von weniger als 45 ppb, bezogen auf das Gewicht des stabilisierten Vollkornmehls,
c) ein Natriumcarbonat-Wasser-Lösemittelrückhaltevermögen (SRC Natriumcarbonat) von weniger als 90 %,
d) einen Gehalt an freier Fettsäure von weniger als 10 Gew.-% von Gesamtmehllipiden bei drei Monaten, oder weniger als 3.000 ppm, bezogen auf das Gewicht des stabilisierten Vollkornmehls, und
e) einen Hexanalgehalt von weniger als 10 ppm nach 1 Monat beschleunigter Lagerung bei 95 °C, bezogen auf das Gewicht des stabilisierten Vollkornmehls, und eine Teilchengrößenverteilung von 0 Gew.-% auf einem US-Standardsieb Nr. 35 (500 Mikrometer) und weniger als etwa 10 Gew.-% auf einem US-Standardsieb Nr. 70 (210 Mikrometer).

22. Hitzestabilisiertes Vollkornmehl nach Anspruch 21, mit einer Teilchengrößenverteilung von mindestens 85 Gew.-% durch ein US-Standardsieb Nr. 100 (149 Mikrometer) und weniger als oder gleich 5 Gew.-% größer als 250 Mikrometer.

23. Hitzestabilisiertes Vollkornmehl nach Anspruch 21, welches ein Weizenvollkornmehl ist.

## Revendications

1. Procédé de production d'une farine de céréales complètes stabilisée comprenant :
a) le broyage de céréales complètes pour obtenir une fraction endosperme indépendante, une fraction son et germe fine à faible teneur en cendres indépendante de l'endosperme et une fraction son et germe grossière indépendante de la fraction endosperme et de la fraction son et germe fine à faible teneur en cendres,
dans lequel ladite fraction endosperme a une teneur en cendres de 0,5 % en poids à 0,6 % en poids % et une distribution granulométrique d'au moins 65 % en poids ayant une taille de particules inférieure ou égale à 149 micromètres, et une distribution inférieure ou égale à 5 % en poids ayant une taille de particules supérieure à 250 micromètres,
ladite fraction son et germe fine à faible teneur en cendres a une teneur en cendres de 0,6 % en poids à 2,0 % en poids et une distribution granulométrique d'au moins 65 % en poids ayant une taille de particules inférieure ou égale à 149 micromètres, et une distribution inférieure ou égale à 10 % en poids ayant une taille de particules supérieure à 250 micromètres, et
ladite fraction son et germe grossière a une teneur en cendres supérieure à 2 % en poids et une distribution granulométrique d'au moins 75 % en poids ayant une taille de particules supérieure ou égale à 500 micromètres, une distribution inférieure ou égale à 5 % en poids ayant une taille de particules inférieure à 149 micromètres, et 15 % en poids à 25 % en poids ayant une taille de particules inférieure à 500 micromètres, mais supérieure ou égale à 149 micromètres,
b) la mouture de ladite fraction son et germe grossière sans endommager essentiellement l'amidon de la fraction son et germe grossière pour obtenir une fraction son et germe grossière moulue, dans lequel ladite fraction son et germe fine à faible teneur en cendres n'est pas moulue,
c) la stabilisation de ladite fraction son et germe fine à faible teneur en cendres et de ladite fraction son et germe grossière moulue en chauffant ladite fraction son et germe fine à faible teneur en cendres et ladite fraction son et germe grossière moulue, pour obtenir une fraction son et germe fine stabilisée, et
d) la combinaison de ladite fraction son et germe fine stabilisée avec ladite fraction endosperme pour obtenir une farine de céréales complètes stabilisée ayant une distribution granulométrique de 0 % en poids sur un tamis normalisé U.S. No. 35 (500 micromètres), et inférieure ou égale à 20 % en poids sur un tamis normalisé U.S. No. 70 (210 micromètres), dans lequel ladite fraction son et germe fine à faible teneur en cendres va de 3 % en poids à 15 % en poids et n'est pas moulue en réduisant de ce fait l'endommagement de l'amidon et en augmentant l'efficacité de production.

2. Procédé selon la revendication 1, dans lequel ladite fraction endosperme va de 60 % en poids à 75 % en poids, ladite fraction son et germe fine à faible teneur en cendres va de 3 % en poids à 15 % en poids, et ladite fraction son et germe grossière va de 10 % en poids à 37 % en poids, lesdits pourcentages en poids étant sur la base du poids total de ladite fraction endosperme, de ladite fraction son et germe fine à faible teneur en cendres et de ladite fraction son et germe grossière, et lesdits pourcentages en poids s'additionnent jusqu'à 100 % en poids.

3. Procédé selon la revendication 1, dans lequel ladite fraction endosperme comprend de 85 % en poids à 95 % en poids d'amidon, ladite fraction son et germe fine à faible teneur en cendres comprend de 10 % en poids à 50 % en poids d'amidon et ladite fraction son et germe grossière comprend de 10 % en poids à 40 % en poids d'amidon, et ladite fraction son et germe fine à faible teneur en cendres a une distribution granulométrique fine essentiellement identique à la distribution granulométrique de la fraction endosperme.

4. Procédé selon la revendication 1, dans lequel ladite étape de mouture de ladite fraction son et germe grossière comprend en outre l'étape d'obtention d'une première fraction son et germe grossière moulue et d'une deuxième fraction son et germe grossière moulue.

5. Procédé selon la revendication 4, dans lequel ladite fraction son et germe fine à faible teneur en cendres, ladite première fraction son et germe grossière moulue et ladite deuxième fraction son et germe grossière moulue sont combinées pour obtenir une fraction son et germe fine combinée.

6. Procédé selon la revendication 5, dans lequel ladite fraction son et germe fine combinée a une distribution granulométrique d'au moins 75 % en poids ayant une taille de particules inférieure ou égale à 149 micromètres, et une distribution inférieure ou égale à 15 % en poids ayant une taille de particules supérieure à 250 micromètres.

7. Procédé selon la revendication 1, dans lequel ledit broyage des céréales complètes comprend la soumission des céréales complètes à une pluralité d'opérations de rupture, d'opération de laminage et d'opérations de tamisage pour obtenir lesdites fraction endosperme, fraction son et germe fine à faible teneur en cendres et fraction son et germe grossière.

8. Procédé selon la revendication 7, dans lequel ladite pluralité d'opérations de rupture inclut l'utilisation de striures émoussées pour réduire l'endommagement de l'amidon pendant les opérations de rupture et pour obtenir une distribution granulométrique plus grande pour lesdites fractions.

9. Procédé selon la revendication 1, dans lequel ladite fraction endosperme est hydratée pour obtenir une teneur en humidité allant de 10 % en poids à 14,5 % en poids, sur la base du poids de ladite fraction endosperme, dans lequel ladite fraction endosperme hydratée est combinée après refroidissement avec ladite fraction son et germe fine stabilisée pour obtenir la farine de céréales complètes stabilisée.

10. Procédé selon la revendication 9, dans lequel ladite fraction endosperme est refroidie à une température inférieure à 32 °C (90 °F) pour obtenir une fraction endosperme refroidie avant combinaison avec ladite fraction son et germe fine stabilisée.

11. Procédé selon la revendication 10, dans lequel ladite fraction son et germe fine stabilisée est refroidie à une température inférieure à 32 °C (90 °F) avant combinaison avec ladite fraction endosperme refroidie.

12. Procédé selon la revendication 1, dans lequel ladite fraction son et germe fine à faible teneur en cendres et ladite fraction son et germe grossière moulue sont hydratées avant stabilisation.

13. Procédé selon la revendication 1, dans lequel ladite fraction son et germe fine à faible teneur en cendres et ladite fraction son et germe grossière moulue sont hydratées à une teneur en humidité de 10 % en poids à 20 % en poids.

14. Procédé selon la revendication 1, dans lequel la farine de céréales complètes stabilisée a une teneur en humidité de 10 % en poids à 14,5 % en poids, sur la base du poids de la farine de céréales complètes stabilisée.

15. Procédé selon la revendication 1, dans lequel la stabilisation de ladite fraction son et germe fine à faible teneur en cendres et de ladite fraction son et germe grossière moulue pour obtenir une fraction son et germe fine stabilisée réduit l'activité de lipase à moins d'environ 250 unités/g/heure, de la fraction son et germe fine stabilisée, où une unité est le nombre de micromoles (∼tm) d'heptanonate de 4-méthylumbelliféryle (4-MUH) hydrolysées par heure par gramme de fraction son et germe fine stabilisée.

16. Procédé selon la revendication 1, dans lequel la stabilisation de ladite fraction son et germe fine à faible teneur en cendres et de ladite fraction son et germe grossière moulue évite une teneur en acrylamide supérieure à 150 parties par milliard, sur la base du poids de ladite fraction son et germe fine stabilisée, dans lequel la stabilisation comprend le chauffage à une température allant de 100 °C à 140 °C.

17. Procédé selon la revendication 1, dans lequel ladite fraction son et germe fine stabilisée a une capacité de rétention de solvant carbonate de sodium-eau (CRS carbonate de sodium) inférieure à 200 %, et la farine de céréales complètes stabilisée a une capacité de rétention de solvant carbonate de sodium-eau (CRS carbonate de sodium) inférieure à 90 %, une teneur en acides gras libres inférieure à 10 % en poids des lipides totaux de farine à trois mois ou inférieure à 3000 ppm, sur la base du poids de la farine de céréales complètes stabilisée, et une teneur en hexanal inférieure à 10 ppm après 1 mois de stockage accéléré à 95 °C, sur la base du poids de la farine de céréales complètes stabilisée.

18. Procédé selon la revendication 1 pour produire une farine de céréales complètes stabilisée sans endommager essentiellement l'amidon,
dans lequel la fraction son et germe fine à faible teneur en cendres n'est pas soumise à une réduction supplémentaire de taille de particules, et la fraction son et germe grossière est soumise à une réduction supplémentaire de taille de particules,
dans lequel ladite mouture de ladite fraction son et germe grossière utilise un processus de mouture à deux phases, dans lequel une première phase de mouture comprend des collisions de particule à particule et une deuxième phase de mouture comprend une mouture par réduction mécanique de taille et dans lequel des particules plus fines qu'une première finesse de particule ne sont pas soumises à ladite deuxième phase de mouture, pour produire une fraction son et germe grossière moulue,
dans lequel, à l'étape (c), ladite fraction son et germe grossière moulue et ladite fraction son et germe fine à faible teneur en cendres sont stabilisées pour obtenir une fraction son et germe fine stabilisée qui a une capacité de rétention de solvant carbonate de sodium-eau inférieure à 200 %, et
dans lequel ladite farine de céréales complètes stabilisée obtenue à l'étape (d) a une capacité de rétention de solvant carbonate de sodium-eau inférieure à 90 % et une teneur en hexanal inférieure à 10 ppm après 1 mois de stockage accéléré à 95 °C, sur la base du poids de la farine de céréales complètes stabilisée.

19. Procédé selon la revendication 18, dans lequel ladite première phase de mouture comprend la mouture de la fraction grossière dans un moulin à écartement, dans lequel une boucle de recyclage de moulin à écartement n'est pas employée, et dans lequel ladite deuxième phase de mouture comprend une mouture dans un moulin universel.

20. Procédé selon la revendication 1 pour produire une farine de céréales complètes stabilisée incluant de l'endosperme, du son et du germe, sans endommager essentiellement l'amidon comprenant :
dans lequel ladite fraction son et germe grossière a un résidu d'endosperme,
dans lequel, à l'étape (b), ladite fraction son et germe grossière, incluant ledit résidu d'endosperme en une quantité de 5 à 10 % de l'endosperme dans les céréales complètes, est moulue de façon à minimiser l'endommagement de l'amidon et pour produire la fraction son et germe grossière moulue,
comprenant en outre l'hydratation de ladite fraction son et germe grossière moulue et de ladite fraction son et germe fine à faible teneur en cendres à une teneur en humidité de 10 % à 20 % en poids, sur la base du poids de la fraction,
dans lequel, à l'étape (c), jusqu'à 10 % dudit résidu d'endosperme provenant de ladite fraction son et germe grossière moulue est soumis à une stabilisation afin d'éviter la gélatinisation de l'amidon, et
80 à 100 % du son et du germe est soumis à une stabilisation pour réduire l'activité de lipase et de lipoxygénase, pour produire une farine de céréales complètes stabilisée qui a une capacité de rétention de solvant carbonate de sodium-eau inférieure à 90 % et une teneur en hexanal inférieure à 10 ppm après 1 mois de stockage accéléré à 95 °C, sur la base du poids de la farine de céréales complètes stabilisée.

21. Farine de céréales complètes stabilisée à la chaleur comprenant une fraction endosperme ayant une teneur en cendres de 0,5 % en poids à 0,6 % en poids %, une fraction son et germe fine à faible teneur en cendres ayant une teneur en cendres de 0,6 % en poids à 2,0 % en poids, et une fraction son et germe grossière ayant une teneur en cendres supérieure à 2 % en poids, la farine de céréales complètes stabilisée à la chaleur ayant :
a) une activité de lipase inférieure à 250 unités/g heure de la farine de céréales complètes stabilisée, où une unité est le nombre de micromoles (µm) d'heptanonate de 4-méthylumbelliféryle (4-MUH) hydrolysé par heure par gramme de farine de céréales complètes stabilisée,
b) une teneur en acrylamide inférieure à 45 parties par milliard, sur la base du poids de farine de céréales complètes stabilisée,
c) une capacité de rétention de solvant carbonate de sodium-eau (CRS carbonate de sodium) inférieure à 90 %,
d) une teneur en acides gras libres inférieure à 10 % en poids des lipides totaux de farine à trois mois ou inférieure à 3000 ppm, sur la base du poids de la farine de céréales complètes stabilisée, et
e) une teneur en hexanal inférieure à 10 ppm après 1 mois de stockage accéléré à 95 °C, sur la base du poids de la farine de céréales complètes stabilisée, et
une distribution granulométrique de 0 % en poids sur un tamis normalisé U.S. No. 35 (500 micromètres) et inférieure ou égale à environ 10 % en poids sur un tamis normalisé U.S. No. 70 (210 micromètres).

22. Farine de céréales complètes stabilisée à la chaleur selon la revendication 21, ayant une distribution granulométrique d'au moins 85 % en poids à travers un tamis normalisé U.S. No. 100 (149 micromètres) et une distribution inférieure ou égale à 5 % en poids supérieure à 250 micromètres.

23. Farine de céréales complètes stabilisée à la chaleur selon la revendication 21, qui est une farine de céréales complètes de blé.
